(19) **Europäisches Patentamt / European Patent Office / Office européen des brevets**

(11) **EP 4 202 793 B1**

(12) # FASCICULE DE BREVET EUROPEEN

(45) Date de publication et mention de la délivrance du brevet:
**06.05.2026   Bulletin 2026/19**

(21) Numéro de dépôt: **21216232.5**

(22) Date de dépôt: **21.12.2021**

(51) Classification Internationale des Brevets (IPC):
**G06N 10/40** *(2022.01)*    **G06N 10/70** *(2022.01)*

(52) Classification Coopérative des Brevets (CPC):
**G06N 10/40; G06N 10/70**

(54) **PROCÉDÉ DE LECTURE DE L'ÉTAT DE SPIN D'UN SYSTÈME ET PROCÉDÉ DE DÉTERMINATION DE LA FIDÉLITÉ ASSOCIÉ**

VERFAHREN ZUM LESEN DES SPINZUSTANDS EINES SYSTEMS UND ENTSPRECHENDES VERFAHREN ZUR BESTIMMUNG DER WIEDERGABETREUE

METHOD FOR READING THE SPIN STATE OF A SYSTEM AND ASSOCIATED METHOD FOR DETERMINING RELIABILITY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:   **23.12.2020   FR 2014084**

(43) Date de publication de la demande:
**28.06.2023   Bulletin 2023/26**

(73) Titulaires:
- **Commissariat à l'Energie Atomique et aux Energies Alternatives**
  **75015 Paris (FR)**
- **Centre national de la recherche scientifique**
  **75016 Paris (FR)**

(72) Inventeurs:
- **MORTEMOUSQUE, Pierre-André**
  **38054 Grenoble Cedex 09 (FR)**
- **JADOT, Baptiste**
  **38000 Grenoble (FR)**
- **MEUNIER, Tristan**
  **38000 Grenoble (FR)**
- **URDAMPILLETA, Matias**
  **38000 Grenoble (FR)**

(74) Mandataire: **Cabinet Camus Lebkiri**
**25 rue de Maubeuge**
**75009 Paris (FR)**

(56) Documents cités:
**US-B1- 10 482 388     US-B2- 7 781 754**

- **HANSON R ET AL: "Spins in few-electron quantum dots", ARXIV.ORG, CORNELL UNIVERSITY LIBRARY, 201 OLIN LIBRARY CORNELL UNIVERSITY ITHACA, NY 14853, 16 October 2006 (2006-10-16), XP080256043, DOI: 10.1103/REVMODPHYS.79.1217**
- **NAZAROV, Y.BLANTER, Y.: "Quantum Transport: Introduction to Nanoscience", 2009, CAMBRIDGE UNIVERSITY PRESS, pages: 445 - 456, XP002804245**

## Description

### DOMAINE TECHNIQUE DE L'INVENTION

Le domaine technique de l'invention est celui de l'informatique quantique.

La présente invention concerne un procédé de lecture complète de l'état de spin de deux particules chargées contenues dans deux boites quantiques couplées, les particules chargées étant dans un état de spin arbitraire, et en particulier un procédé de lecture qui ne fait pas appel pour la lecture à des particules chargées contenues dans des boites quantiques extérieures au système considéré dont l'état initial est connu. Elle concerne également un procédé permettant de déterminer la fidélité de cette lecture.

### ARRIERE-PLAN TECHNOLOGIQUE DE L'INVENTION

Lorsque l'on cherche à déterminer l'état d'un qubit de spin formé d'une particule chargée contenue dans une boite quantique, il est habituel d'avoir recours à une deuxième particule chargée contenue dans une deuxième boite quantique dont l'état de spin est connu de sorte à mettre en œuvre un procédé de lecture en deux étapes : une première étape de conversion spin/charge par la deuxième boite quantique et une deuxième étape de lecture de l'état de charge de la deuxième boite quantique.

Aussi, il apparait de ce qui précède qu'il n'est à priori pas possible d'utiliser le principe classique de lecture de l'état de spin de deux particules chargées sans avoir recours à des particules chargées contenues dans des boites quantiques extérieures audit système dont l'état initial de spin est connu. Cependant, une telle solution présente l'inconvénient majeur de mobiliser quatre boites quantiques (ou trois boites quantiques avec un transfert de charge) alors que deux d'entre elles seulement (ceux du système dont on cherchera à connaitre l'état de spin) seront utilisés pour la réalisation de portes quantiques, les deux autres ne servant qu'à identifier l'état de spin du système une fois les portes quantiques réalisée. De plus, il est nécessaire de connaître l'état de spin des particules chargées contenues dans ces boites quantiques extérieures pour effectuer cette lecture. A titre d'exemple, le brevet US 10482388 B1 divulgue des procédés permettant uniquement de déterminer si l'état de spin des deux particules chargées est l'état de spin singulet, mais ne permet pas de différencier les différents états triplets.

De plus, si l'on cherche à appliquer le même principe de lecture à un système à deux particules chargées contenues dans deux boites quantiques couplées et que l'on souhaite déterminer de manière complète l'état dudit système à l'aide des seules boites quantiques du système, on se heurte à la difficulté technique suivante : l'état de charge d'une boite quantique ne peut varier qu'entre deux valeurs alors que l'état de spin du système peut prendre quatre valeurs. Aussi, il n'est pas possible de « coder » dans l'état de charge les quatre états de spin possibles du système.

Aussi, il existe un besoin d'un procédé de lecture de l'état de spin complet d'un système à deux particules chargées contenues dans deux boites quantiques couplées ne nécessitant pas l'usage de particules chargées contenue dans des boites quantiques extérieures au système considéré et dont l'état de spin initial est connu.

### RESUME DE L'INVENTION

L'invention offre une solution aux problèmes évoqués précédemment, en permettant, à partir du seul système de particules chargées contenues dans deux boites quantiques couplées, de déterminer l'état de spin complet du système considéré sans connaissance a priori de cet état de spin, à partir de la mesure de l'état de charge du système. La présente demande est définie dans les revendications indépendantes. Les revendications dépendantes définissent des modes de réalisations spécifiques.

Pour cela, un premier aspect de l'invention concerne un procédé de mesure de l'état de spin de deux particules chargées pouvant adopter un premier état de spin noté S, un deuxième état de spin noté T+, un troisième état de spin noté T0 et un quatrième état de spin noté T-, les deux particules chargées étant contenues dans un système, comprenant une première boite quantique et une deuxième boite quantique caractérisé par un premier paramètre $\Gamma$ relatif à la barrière de potentiel séparant les deux boites quantiques et un deuxième paramètre $\varepsilon$ correspondant à la différence en énergie entre l'état fondamental de la première boite quantique et l'état fondamental de la deuxième boite quantique, le couple formé par les valeurs de ces deux paramètres définissant un point de fonctionnement du système en fonction duquel le système adopte un premier état de charge noté (1,1) dans lequel chaque boite quantique contient une particule chargée, un deuxième état de charge noté (2,0) dans lequel la première boite quantique contient deux particules chargées ou un troisième état de charge noté (0,2) dans lequel la deuxième boite quantique contient deux particules chargée, le point de fonctionnement du système étant initialement dans un premier point de fonctionnement correspondant au premier état de charge (1,1) du système et pour lequel le premier S, le deuxième T+, le troisième T0 et le quatrième T- états de spin sont des états propres du spin des deux particules chargées, le procédé (100) comprenant :

- une première étape de modification du point de fonctionnement du système durant laquelle le point de fonctionnement se déplace du premier point de fonctionnement vers un deuxième point de fonctionnement correspondant au deuxième état de charge (2,0) ou au troisième état de charge (0,2), le niveau d'énergie du premier état de spin S et du deuxième état de spin T+ formant un croisement évité lors du déplacement du premier point de fonctionnement vers le deuxième point de fonctionnement, la modification du point de fonctionnement se faisant non-adiabatiquement lors du passage du croisement évité de sorte que, durant cette étape, le système transite du premier état de charge (1,1) à l'état de charge correspondant au deuxième point de fonctionnement lorsque les deux particules chargées contenues dans le système sont dans le premier état de spin S et se maintient dans le premier état de charge (1,1) pour les autres états de spin ;

- une première étape de mesure de l'état de charge du système, l'état de spin des deux particules chargées au premier point de fonctionnement étant le premier état de spin S si l'état de charge du système mesuré est égal à l'état de charge correspondant au deuxième point de fonctionnement, le point de fonctionnement étant à nouveau déplacé au premier point de fonctionnement ;

- une deuxième étape de modification du point de fonctionnement du système durant laquelle le point de fonctionnement se déplace du premier point de fonctionnement vers le deuxième point de fonctionnement, la modification du point de fonctionnement se faisant adiabatiquement lors du passage du croisement évité de sorte que, durant cette étape, le système transite du premier état de charge (1,1) à l'état de charge correspondant au deuxième point de fonctionnement lorsque les des deux particules chargées contenues dans le système sont dans le deuxième état de spin T+ et se maintient dans le premier état de charge (1,1) pour les autres états de spin ;

- une deuxième étape de mesure de l'état de charge du système, l'état de spin des deux particules chargées au premier point de fonctionnement étant le deuxième état de spin T+ si l'état de charge du système mesuré est égal à l'état de charge correspondant au deuxième point de fonctionnement, le point de fonctionnement étant à nouveau déplacé au premier point de fonctionnement ;

- une troisième étape de modification du point de fonctionnement du système durant laquelle le point de fonctionnement se déplace du premier point de fonctionnement vers le deuxième point de fonctionnement, la modification du point de fonctionnement se faisant non-adiabatiquement lors du passage du croisement évité ;

- une étape d'attente à un point de fonctionnement d'attente correspondant à un état de charge identique à celui du deuxième point de fonctionnement durant un temps prédéfini, étape durant laquelle le système transite du premier état de charge (1,1) à l'état de charge correspondant au deuxième point de fonctionnement lorsque les des deux particules chargée sont dans le troisième état de spin T0 et se maintient dans le premier état de charge pour le quatrième état de spin T- ;

- une troisième étape de mesure de l'état de charge du système, l'état de spin des deux particules au premier point de fonctionnement étant le troisième état de spin T0 si l'état de charge du système mesuré est égal à l'état de charge correspondant au deuxième point de fonctionnement et le quatrième état de spin T- si l'état de charge du système mesuré est égal au premier état de charge (1,1).

La notation adoptée pour les états de charge ne doit pas être interprétée de manière limitative, mais a été choisie afin de faciliter la compréhension de l'invention. Ainsi, l'état de charge (1,1) doit être compris comme l'état de charge (n,n) où n est un nombre de particules chargées pour lequel le spin résultant est un spin ½. Suivant cette même notation, l'état de charge (2,0) (respectivement (0,2)) doit être compris comme l'état de charge (n+1,n-1) (respectivement (n-1,n+1)). Ainsi, grâce au procédé selon un premier aspect de l'invention, il est possible de déterminer l'état de spin du système, c'est-à-dire l'état de spin de chaque qubit du système, sans avoir recours à un ou plusieurs qubits extérieurs. C'est notamment avantageux lorsque l'on cherche à maximiser le nombre de qubits d'une matrice de qubits utilisés pour la réalisation de portes quantiques puisque les mêmes qubits peuvent être utilisés pour la réalisation de portes et la lecture des qubits. En outre, le procédé selon l'invention ne nécessite aucune connaissant préalable de l'état de spin, contrairement aux procédés de l'état de la technique dans lesquels l'état de de spin du qubit de lecture doit être connu.

Outre les caractéristiques qui viennent d'être évoquées dans le paragraphe précédent, le procédé selon un premier aspect de l'invention peut présenter une ou plusieurs caractéristiques complémentaires parmi les suivantes, considérées individuellement ou selon toutes les combinaisons techniquement possibles.

Dans un mode de réalisation, le point de fonctionnement d'attente est différent du deuxième point de fonctionnement, le procédé comprenant, avant l'étape d'attente, une étape de déplacement du point de fonctionnement du deuxième point de fonctionnement vers le point de fonctionnement d'attente.

Dans un mode de réalisation chaque étape de modification du point de fonctionnement du premier point de fonctionnement au deuxième point de fonctionnement comprend :

- une sous-étape de modification du premier point de fonctionnement à un point de fonctionnement intermédiaire, le point de fonctionnement intermédiaire correspondant au premier état de charge du système, le croisement évité formé par le premier état de spin S et du deuxième état de spin T+ étant franchi lors de cette sous-étape ;

- une sous-étape de modification du point de fonctionnement intermédiaire au deuxième point de fonctionnement, la modification se faisant non-adiabatiquement durant cette sous-étape.

Dans un mode de réalisation, chaque étape de mesure de l'état de charge est précédée d'une étape de déplacement du point de fonctionnement du deuxième point de fonctionnement ou du point de fonctionnement d'attente vers un quatrième point de fonctionnement correspondant à un état de charge identique au deuxième point de fonctionnement et ayant une valeur du premier paramètre $\Gamma$ telle que :

$$\Gamma \ll \frac{1}{\tau_{mes}}$$

où $\tau_{mes}$ est la constante de temps associée à la mesure de l'état de charge du système.

Un deuxième aspect de l'invention concerne un procédé de détermination de la fidélité de la mesure d'un premier état de spin noté S de deux particules chargées pouvant adopter ledit premier état de spin S, un deuxième état de spin noté T+, un troisième état de spin noté T0 et un quatrième état de spin noté T-, les deux particules chargées étant contenues dans un système, comprenant une première boite quantique et une deuxième boite quantique caractérisé par un première paramètre $\Gamma$ relatif à la barrière de potentiel séparant les deux boites quantiques et un deuxième paramètre $\varepsilon$ correspondant à la différence en énergie entre l'état fondamental de la première boite quantique et l'état fondamental de la deuxième boite quantique, le couple formé par les valeurs de ces deux paramètres définissant un point de fonctionnement du système en fonction duquel le système adopte un premier état de charge noté (1,1) dans lequel chaque boite quantique contient une particule chargée, un deuxième état de charge noté (2,0) dans lequel la première boite quantique contient deux particules chargées ou un troisième état de charge noté (0,2) dans lequel la deuxième boite quantique contient deux particules chargées, le point de fonctionnement du système étant initialement dans un premier point de fonctionnement correspondant au premier état de charge (1,1) du système et pour lequel le premier S, le deuxième T+, le troisième T0 et le quatrième T- états de spin sont des états propres du spin des deux particules chargées, le procédé comprenant, pour une population d'états de spins initiale dans laquelle le premier état de spin S est majoritaire :

- une étape de modification du point de fonctionnement du système durant laquelle le point de fonctionnement se déplace du premier point de fonctionnement vers un deuxième point de fonctionnement correspondant au deuxième état de charge (2,0) ou au troisième état de charge (0,2), le niveau d'énergie du premier état de spin S et du deuxième état de spin T+ formant un croisement évité lors du déplacement du premier point de fonctionnement vers le deuxième point de fonctionnement, la modification du point de fonctionnement comprenant un nombre prédéterminé d'aller-retours non-adiabatiques de part et d'autre du croisement évité ;

- une étape de mesure de l'état de charge du système ;

les étapes étant répétées à partir de la même population d'état de spins pour une pluralité de nombres d'aller-retour, la fidélité étant déterminée à partir de l'évolution de la probabilité de mesure d'un état de charge correspondant au deuxième point de fonctionnement en fonction du nombre d'aller-retours.

Un troisième aspect de l'invention concerne un procédé de détermination de la fidélité de la mesure d'un deuxième état de spin noté T+ de deux particules chargées pouvant adopter un premier état de spin S, le deuxième état de spin noté T+, un troisième état de spin noté T0 et un quatrième état de spin noté T-, les deux particules chargées étant contenues dans un système, comprenant une première boite quantique et une deuxième boite quantique caractérisé par un première paramètre $\Gamma$ relatif à la barrière de potentiel séparant les deux boites quantiques et un deuxième paramètre $\varepsilon$ correspondant à la différence en énergie entre l'état fondamental de la première boite quantique et l'état fondamental de la deuxième boite quantique, le couple formé par les valeurs de ces deux paramètres définissant un point de fonctionnement du système en fonction duquel le système adopte un premier état de charge noté (1,1) dans lequel chaque boite quantique contient une particule chargée, un deuxième état de charge noté (2,0) dans lequel la première boite quantique contient deux particules chargées et un troisième état de charge noté (0,2) dans lequel la deuxième boite quantique contient deux particules chargées, le point de fonctionnement du système étant initialement dans un premier point de fonctionnement correspondant au premier état de charge (1,1) du système et pour lequel le premier S, le deuxième T+, le troisième T0 et le quatrième T- états de spin sont des états propres du spin des deux particules chargées, le procédé comprenant, pour une population d'états de spins initiale dans laquelle le deuxième état de spin T+ est majoritaire :

- une étape de modification du point de fonctionnement du système durant laquelle le point de fonctionnement se déplace du premier point de fonctionnement vers un deuxième point de fonctionnement correspondant au deuxième état de charge (2,0) ou au troisième état de charge (0,2), le niveau d'énergie du premier état de spin S et du deuxième état de spin T+ formant un croisement évité lors du déplacement du premier point de fonctionnement vers le deuxième point de fonctionnement, la modification du point de fonctionnement comprenant un nombre prédéterminé d'aller-retours adiabatiques de part et d'autre du croisement évité ;

- une étape de mesure de l'état de charge du système ;

les étapes étant répétées à partir de la même population d'état de spins pour une pluralité de nombres d'aller-retour, la fidélité étant déterminée à partir de l'évolution de la probabilité de mesure d'un état de charge correspondant au deuxième point de fonctionnement en fonction du nombre d'aller-retours.

Un quatrième aspect de l'invention concerne un procédé de détermination de la fidélité de la mesure d'un troisième état de spin noté T0 de deux particules chargées pouvant adopter un premier état de spin S, un deuxième état de spin noté T+, le troisième état de spin noté T0 et un quatrième état de spin noté T-, les deux particules chargées étant contenues dans un système, comprenant une première boite quantique et une deuxième boite quantique caractérisé par un première paramètre $\Gamma$ relatif à la barrière de potentiel séparant les deux boites quantiques et un deuxième paramètre $\varepsilon$ correspondant à la différence en énergie entre l'état fondamental de la première boite quantique et l'état fondamental de la deuxième boite quantique, le couple formé par les valeurs de ces deux paramètres définissant un point de fonctionnement du système en fonction duquel le système adopte un premier état de charge noté (1,1) dans lequel chaque boite quantique contient une particule chargée, un deuxième état de charge noté (2,0) dans lequel la première boite quantique contient deux particules chargées et un troisième état de charge noté (0,2) dans lequel la deuxième boite quantique contient deux particules chargées, le point de fonctionnement du système étant initialement dans un premier point de fonctionnement correspondant au premier état de charge (1,1) du système et pour lequel le premier S, le deuxième T+, le troisième T0 et le quatrième T- états de spin sont des états propres du spin des deux particules chargées, le procédé comprenant, pour une population d'états de spins initiale dans laquelle le troisième état de spin T0 est majoritaire :

- une étape de modification du point de fonctionnement du système durant laquelle le point de fonctionnement se déplace du premier point de fonctionnement vers un deuxième point de fonctionnement correspondant au deuxième état de charge (2,0) ou au troisième état de charge (0,2), le niveau d'énergie du premier état de spin S et du deuxième état de spin T+ formant un croisement évité lors du déplacement du premier point de fonctionnement vers le deuxième point de fonctionnement, la modification du point de fonctionnement se faisant non-adiabatiquement lors du passage du croisement évité ;

- une étape d'attente à un point de fonctionnement d'attente correspondant à un état de charge identique à celui du deuxième point de fonctionnement durant un temps prédéfini ;

- une étape de mesure de l'état de charge du système ;

les étapes étant répétées à partir de la même population d'état de spins pour une pluralité de temps d'attentes prédéfinis, la fidélité étant déterminée à partir de l'évolution de la probabilité de mesure d'un état de charge correspondant au deuxième point de fonctionnement en fonction du temps d'attentes.

Un cinquième aspect de l'invention concerne un dispositif quantique comprenant au moins deux qubits, de préférence une matrice MQ de qubits, et des moyens configurés pour mettre en œuvre un procédé selon un premier, un deuxième, un troisième ou un quatrième aspect de l'invention.

Un sixième aspect de l'invention concerne un programme d'ordinateur comprenant des instructions qui, lorsque le programme est exécuté par un ordinateur, conduisent celui-ci à mettre en œuvre le procédé selon un premier, un deuxième, un troisième ou un quatrième aspect de l'invention.

Un septième aspect de l'invention concerne un support de données lisible par ordinateur, sur lequel est enregistré le programme d'ordinateur selon un sixième aspect de l'invention.

L'invention et ses différentes applications seront mieux comprises à la lecture de la description qui suit et à l'examen des figures qui l'accompagnent.

**BREVE DESCRIPTION DES FIGURES**

Les figures sont présentées à titre indicatif et nullement limitatif de l'invention.

La [Fig. 1] montre un ordinogramme d'un procédé selon un premier aspect de l'invention.

La [Fig. 2] montre une représentation schématique d'un système selon l'invention dans un premier état de charge.

La [Fig. 3] montre une représentation schématique d'un système selon l'invention dans un troisième état de charge.

La [Fig. 4] montre une représentation schématique d'un diagramme de stabilité.

La [Fig. 5] montre une matrice de boites quantiques susceptible d'être utilisée pour la mise en œuvre de l'invention.

La [Fig. 6] montre la position du premier point de fonctionnement et du deuxième point de fonctionnement dans le diagramme de stabilité ainsi que les zones relatives à différente propriété des états de spin des particules chargées.

La [Fig. 7] illustre le principe de la formule Landau-Zener pour les croisements évités.

La [Fig. 8] montre l'évolution de l'énergie des états de spin des particules chargées en fonction du deuxième paramètre $\varepsilon$ du système selon l'invention.

Les [Fig. 9] à [Fig. 16] illustrent certains modes de réalisation d'un procédé selon un premier aspect de l'invention.

La [Fig. 17] illustre un mode de réalisation d'un procédé selon un deuxième aspect de l'invention.

La [Fig. 18] montre une représentation schématique d'une population d'états de spin.

La [Fig. 19] montre une représentation schématique de la probabilité de mesurer un état de charge donnée en fonction du nombre d'aller-retours au niveau du croisement évité.

La [Fig. 20] illustre un mode de réalisation d'un procédé selon un troisième aspect de l'invention.

La [Fig. 21] illustre un mode de réalisation d'un procédé selon un quatrième aspect de l'invention.

## DESCRIPTION DETAILLEE

Les figures sont présentées à titre indicatif et nullement limitatif de l'invention.

## Procédé de mesure de l'état de spin de deux particules chargées

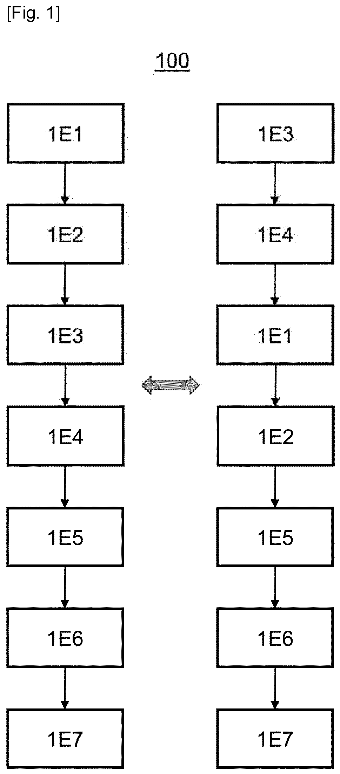

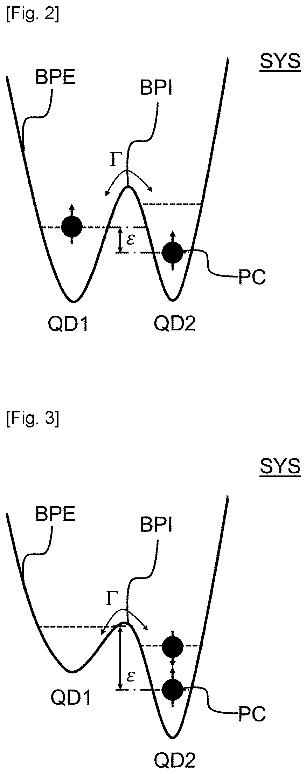

Un premier aspect de l'invention illustré à la [Fig. 1], à la [Fig. 2] et à la [Fig.3] concerne un procédé 100 de mesure de l'état de spin de deux particules chargées PC porteuses d'un spin, par exemple deux électrons ou encore deux trous. Les deux particules chargées PC peuvent adopter un premier état de spin noté S (connu sous le nom de singulet ou *singlet* en anglais), un deuxième état de spin noté T+, un troisième état de spin noté T0 et un quatrième état de spin noté T- (ces trois états étant connus sous le nom de triplet et se différenciant entre eux par la composante en z de leur moment magnétique).

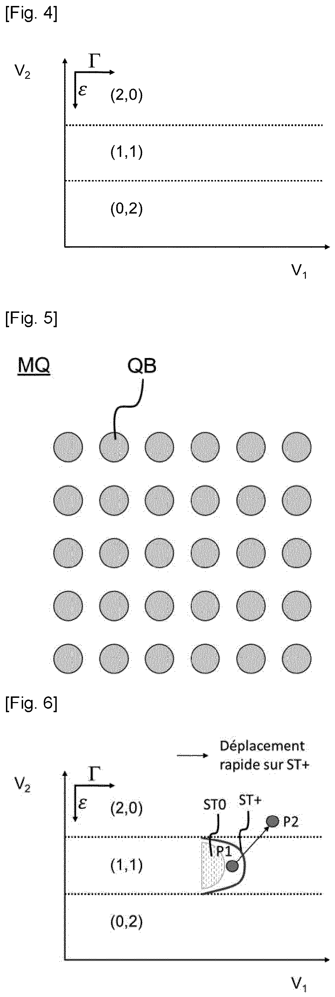

Dans le procédé 100 selon l'invention, les deux particules chargées PC sont contenues dans un système SYS, comprenant une première boite quantique QD1 et une deuxième boite quantique QD2. Un tel système SYS est illustré à la [Fig. 2] et à la [Fig. 3], et se caractérise par un premier paramètre $\Gamma$ relatif à la barrière de potentiel BPI séparant les deux boites quantiques QD1,QD2 et un deuxième paramètre $\varepsilon$ correspondant à la différence en énergie entre l'état fondamental de la première boite quantique QD1 et l'état fondamental de la deuxième boite quantique QD2. Par ailleurs, les deux boites quantiques QD1,QD2 du système SYS sont séparées d'éventuelles boites quantiques adjacentes par une deuxième barrière de potentiel BPE, par exemple lorsque les deux boites quantiques QD1,QD2 appartiennent à un matrice MQ de boites quantiques QD (cf. [Fig. 5] décrite plus loin). Dans ce mode de réalisation, le paramètre $\Gamma$ est tel que :

$$\Gamma \ll \frac{1}{\tau_{poc}}$$

où $\tau_{proc}$ est le temps nécessaire pour la mise en œuvre d'un procédé selon l'invention, par exemple :

$$\Gamma < \frac{1}{100 \times \tau_{poc}}$$

Le couple formé par les valeurs du premier paramètre $\Gamma$ et du deuxième paramètre $\varepsilon$ définissent une point de fonctionnement du système SYS en fonction duquel le système SYS peut adopter un premier état de charge noté (1,1) dans lequel chaque boite quantique QD1,QD2 contient une particule chargée PC (cf. [Fig. 2]), un deuxième état de charge noté (2,0) dans lequel la première boite quantique QD1 contient deux particules chargées PC et un troisième état de charge noté (0,2) dans lequel la deuxième boite quantique QD2 contient deux particules chargées PC (cf. [Fig. 3]). Dans la suite, on parlera de déplacement de point de fonctionnement le fait de modifier la valeur du premier paramètre $\Gamma$ et/ou du deuxième paramètre $\varepsilon$.

En effet, un tel point de fonctionnement peut être représenté dans un diagramme de stabilité tel qu'illustré à la [Fig. 4] et une modification du première paramètre $\Gamma$ et/ou du deuxième paramètre $\varepsilon$ correspond à un déplacement dans ce diagramme. Dans ce diagramme de stabilité, le premier paramètre $\Gamma$ peut être modifié à l'aide d'une première tension V1 tandis que le deuxième paramètre $\varepsilon$ peut être modifié à l'aide d'une tension V2. L'obtention d'un tel diagramme de stabilité est connue de l'homme du métier est ne sera donc pas détaillée ici. Il est à noter que le diagramme de stabilité de la [Fig. 4] a été simplifié à des fins d'illustration, mais qu'expérimentalement, les deux paramètres dépendent généralement de la première tension V1 et de la deuxième tension V2. De plus, dans cette représentation simplifiée d'un diagramme de stabilité, deux points de fonctionnement ayant la même abscisse sont relatifs à une même barrière de potentiel entre les deux boites quantiques QD1,QD2 du système (et donc la même valeur du premier paramètre $\Gamma$), tandis que deux points de fonctionnement ayant la même ordonnée sont relatif à une même valeur du deuxième paramètre de $\varepsilon$.

Comme déjà mentionné, un système SYS selon l'invention peut par exemple être formée sur une matrice MQ de boites quantiques QD telle qu'illustrée à la [Fig. 5]. Sur cette figure, chaque cercle grisé illustre une boite quantique QD de la matrice MQ qui peut, par le biais de grilles (non représentées), être contrôlée de sorte à pouvoir se coupler ou au contraire s'isoler des boites quantiques QD adjacentes. Une telle matrice MQ de boites quantiques QD est par exemple illustré aux figures 1 et 3 du document FR 306629 A1.

Comme illustré à la [Fig. 6], dans le procédé 100 selon l'invention, le point de fonctionnement du système SYS est initialement dans un premier point de fonctionnement P1 correspondant au premier état de charge (1,1) du système SYS et pour lequel les premier S, deuxième T+, troisième T0 et quatrième T- états de spin sont des états propres du spin des deux particules chargées PC. On notera que le premier point de fonctionnement P1 est toujours situé entre la région ST0 (cette région étant généralement utilisée lors de la manipulation des particules chargées PC contenues dans le système SYS) et la région ST+ (ces deux régions, connues dans le domaine, seront détaillées dans la suite) et il est séparé du deuxième point de fonctionnement P2 (également détaillé dans la suite) par la région ST+.

*Premier état de spin S ou autres états de spin T +, T0, T-*

Comme illustré à la [Fig. 6], le procédé 100 selon l'invention comprend une première étape 1E1 de modification du point de fonctionnement du système durant laquelle le point de fonctionnement se déplace du premier point de fonctionnement P1 vers un deuxième point de fonctionnement P2 correspondant au deuxième état de charge (2,0) ou au troisième état de charge (0,2). Dans l'exemple de la [Fig. 6] (et dans la suite du texte), le deuxième point de fonctionnement P2 correspond au deuxième état de charge (2,0). Par ailleurs, le niveau d'énergie du premier état de spin S et du deuxième état de spin T+ forment un croisement évité lors du déplacement du premier point de fonctionnement P1 vers le deuxième point de fonctionnement P2. Une région correspondant à ce croisement évité, connue du domaine sous le nom de région ST+, est représentée dans le diagramme de stabilité de la [Fig. 6].

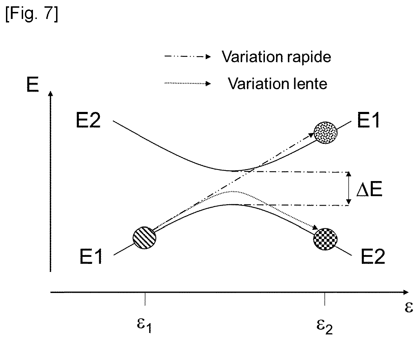

Un croisement évité (*avoided crossing* ou *anticrossing* en anglais) est illustré à la [Fig. 7] qui présente le diagramme énergétique d'un premier état E1 et d'un deuxième état E2 en fonction du deuxième paramètre $\varepsilon$. Pour la valeur $\varepsilon_1$ du paramètre $\varepsilon$, l'état fondamental est E1 tandis que pour la valeur $\varepsilon_2$ de ce paramètre, l'état fondamental est E2. Autrement dit, la variation de la valeur du paramètre $\varepsilon$ de la valeur $\varepsilon_1$ à la valeur $\varepsilon_2$ correspond à une transition de l'état fondamental du système de l'état E1 à l'état E2. En partant de l'état E1 et en faisant varier la valeur du paramètre $\varepsilon$ de la valeur $\varepsilon_1$ à la valeur $\varepsilon_2$, l'état final du système dépend de la vitesse de cette variation. Le comportement d'un tel système sur un croisement évité est connu et formalisé par la formule de Landau-Zener.

Si la variation se fait rapidement, alors l'état final est identique à l'état initial, c'est-à-dire que, dans l'exemple de la [Fig. 7], l'état E1 est inchangé. En revanche, si la variation est lente, alors pour un état initial E1, l'état final est l'état E2. La notion de rapide ou lente est fonction de l'écart minimum en énergie $\Delta E$ entre les deux états E1,E2 du système et peut être déterminée à l'aide de la formule de Landau-Zener. Dans la suite, on entend par variation lente ou variation adiabatique une variation qui correspond à une probabilité $P_{E1 \rightarrow E2} \geq 0.99$, de préférence $P_{E1 \rightarrow E2} \geq 0.999$. De la même manière, on entend par variation rapide ou variation nonadiabatique une variation qui correspond à une probabilité $P_{E1 \rightarrow E2} \leq 0.01$, de préférence $P_{E1 \rightarrow E2} \leq 0.001$ .

Au premier point de fonctionnement P1, le premier état de spin S correspond à l'état E2 de la [Fig. 7] et le deuxième état de spin T+ correspond à l'état E1 de la même figure. De plus, au point de fonctionnement P1, ces deux états de spin correspondent au premier état de charge (1,1). En revanche, au point de fonctionnement P2, le premier état de spin S correspond à l'état de charge relatif au deuxième point de fonctionnement P2 (c'est-à-dire le deuxième état de charge (2,0) ou le troisième état de charge (0,2)) alors que le deuxième état de spin T+ correspond au premier état de charge (1,1) (ceci est d'ailleurs vrai pour les trois états triplets T+,T0,T- et pas seulement pour le deuxième état de spin T+). Cette différence de charge s'explique par le blocage de Pauli qui, lorsque les deux particules chargées PC sont dans un état de spin triplet, interdit à ces dernières d'être dans la même boite quantique QD1,QD2.

Or durant la première étape 1E1 de modification du point de fonctionnement, la modification du point de fonctionnement se fait rapidement lors du passage du croisement évité ST+. Autrement dit, le système SYS maintient son état de spin. En particulier, si les particules chargées PC sont dans un premier état de spin S au premier point de fonctionnement P1 alors elles seront également dans un premier état de spin S au deuxième point de fonctionnement P2. Cependant, comme déjà mentionné, au premier point de fonctionnement P1, le premier état de spin S correspond au premier état de charge (1,1) tandis qu'au deuxième point de fonctionnement le premier état de spin S correspond à l'état de charge relatif audit point de fonctionnement (c'est-à-dire au deuxième état de charge (2,0) ou au troisième état de charge (0,2)). Aussi, lors de la première étape 1E1 de modification du point de fonctionnement, le système SYS transite du premier état de charge (1,1) à l'état de charge correspondant au deuxième point de fonctionnement P2

lorsque les des deux particules chargées PC contenues dans le système SYS sont dans le premier état de spin S au premier point de fonctionnement P1. Il y a donc conversion spin/charge lors de cette étape lorsque l'état de spin des particules chargées PC au premier point de fonctionnement P1 est le premier état de spin S.

Pour des raisons similaires, si les particules chargées PC sont dans le deuxième état de spin T+ au premier point de fonctionnement P1, alors elles seront également au deuxième état de spin T+ au deuxième fonctionnement P2. De plus, comme mentionné précédemment, l'état de charge correspondant au deuxième état de spin T+ est le premier état de charge (1,1). Aussi, aucun changement d'état de charge n'est constaté lors de cette étape 1E1 dans ce cas.

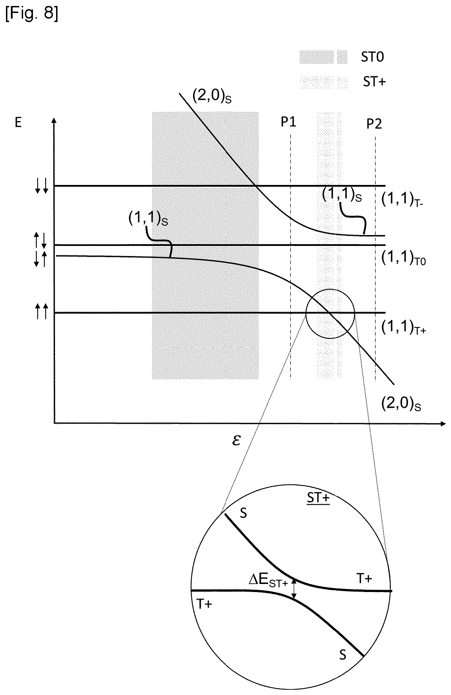

Afin de d'illustrer l'évolution du troisième état de spin T0 et du quatrième état de spin T- lors de la première étape 1E1 de modification du point de fonctionnement, un diagramme en énergie des différents états de spin des deux particules chargées PC est illustré à la [Fig. 8]. Sur ce diagramme est représentée l'énergie des quatre états de spin en fonction du deuxième paramètre $\varepsilon$ ainsi que l'état de charge qui leur est associé (il est supposé ici que le deuxième point de fonctionnement P2 correspond au deuxième état de charge (2,0)). Une position schématique du premier point de fonctionnement P1 et du deuxième point de fonctionnement P2 figure également sur ce diagramme pour en faciliter la compréhension. Le diagramme représente également la région ST0 évoquée précédemment. En outre, le croisement évité et la région ST+ qui lui est associée sont également représentée, l'écart en énergie au niveau du croisement évité étant noté $\Delta E_{ST+}$. C'est donc par rapport à cet écart en énergie que sont déterminées les notions de modification rapide et modification lente. Il est utile de noter qu'un diagramme similaire peut être représenté en fonction du première paramètre $\Gamma$, mais que la lecture du diagramme ainsi obtenu est plus complexe et n'a donc pas été choisie ici. La personne du domaine comprendra cependant que les enseignements qu'il est possible d'extraire du diagramme de la [Fig. 8] sont identiques à ceux qu'il est possible d'extraire du même diagramme en fonction du premier paramètre $\Gamma$ ou bien encore d'une variation combinée deux paramètres $\Gamma$ et $\varepsilon$. Il est également utile de noter qu'un tel diagramme est connue de la personne du domaine comme le montre par exemple la figure 5.22 du chapitre 5 de l'ouvrage Nazarov, Y., & Blanter, Y. (2009) ; Quantum Transport: Introduction to Nanoscience ; Cambridge: Cambridge University Press cité en introduction. L'invention réside donc dans l'utilisation astucieuse des propriétés physiques d'un système SYS selon l'invention représentées par ce diagramme.

Ce diagramme en énergie permet de constater que, lors de la première étape 1E1 de modification du point de fonctionnement, si les particules chargées PC sont dans un troisième état de spin T0 ou un quatrième état de spin T- au premier point de fonctionnement P1, leur état de spin n'est pas modifié et aucun changement d'état de charge n'est observé.

Aussi, lors de la première étape 1E1 de modification du point de fonctionnement, le système SYS se maintient dans le premier état de charge (1,1) pour les autres états de spin, c'est-à-dire lorsque les particules chargées sont dans un deuxième T+, troisième T0 ou quatrième T- état de spin.

Afin de pouvoir déterminer s'il y a eu ou non un changement de l'état de charge du système SYS, le procédé 100 selon l'invention comprend une première étape 1E2 de mesure de l'état de charge du système SYS, par exemple à l'aide d'un électromètre, l'état de spin des deux particules chargées PC étant le premier état de spin S si l'état de charge du système mesuré est égal à l'état de charge correspondant au deuxième point de fonctionnement P2. Il est utile de noter ici que l'absence de changement d'état de charge du système SYS lors de cette étape 1E2 permet de déduire que l'état de spin des particules chargées PC n'est pas le premier état de spin S, mais ne permet pas de déduire cet état de spin, ce dernier pouvant être le deuxième état de spin T+, le troisième état de spin T0 ou le quatrième état de spin T-.

Aussi, en l'absence de changement d'état de charge, il est nécessaire de poursuivre le procédé 100 et le point de fonctionnement est donc à nouveau déplacé au premier point de fonctionnement P1 afin de poursuivre le procédé 100. Ce déplacement est de préférence effectué rapidement par le chemin le plus court dans le diagramme de stabilité en le point de fonctionnement auquel est effectuée la mesure de l'état de charge et le premier point de fonctionnement P1.

### *Deuxième état de spin T+ ou autres états de spin S, T0, T-*

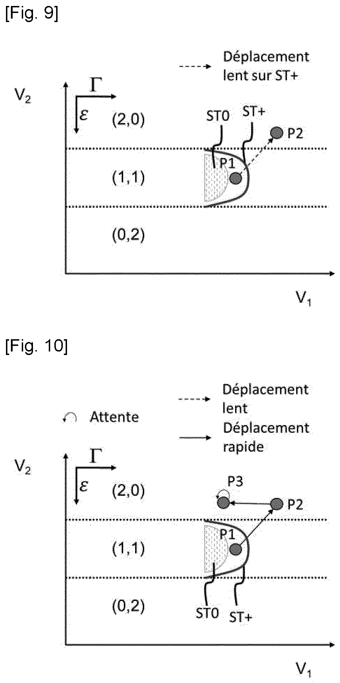

Comme illustré à la [Fig. 9], le procédé 100 selon l'invention comprend également une deuxième étape 1E3 de modification du point de fonctionnement du système SYS durant laquelle le point de fonctionnement se déplace du premier point de fonctionnement P1 vers le deuxième point de fonctionnement P2, la modification du point de fonctionnement se faisant lentement lors du passage du croisement évité de sorte que, durant cette étape, le système SYS transite du premier état de charge (1,1) à l'état de charge correspondant au deuxième point de fonctionnement P2 lorsque les des deux particules chargées PC contenues dans le système SYS sont dans le deuxième état de spin T+ et se maintient dans le premier état de charge (1,1) pour les autres états de spin.

Comme mentionné précédemment, au point de fonctionnement P1, le premier état de spin S correspond à l'état E2 de la [Fig. 7] et le deuxième état de spin T+ correspond à l'état E1 de la même figure. De plus, au point de fonctionnement P1, ces deux états de spin correspondent au premier état de charge (1,1). En revanche, au point de fonctionnement P2, le premier état de spin S correspond à l'état de charge relatif au deuxième point de fonctionnement P2 (c'est-à-dire le deuxième état de charge (2,0) ou le troisième état de charge (0,2)) alors que le deuxième état de spin T+ correspond au premier état de charge (1,1).

Or durant la deuxième étape 1E3 de modification du point de fonctionnement, la modification du point de fonctionnement se fait lentement lors du passage du croisement évité ST+. Autrement dit, si les particule chargées PC sont dans le premier état de spin S au premier point de fonctionnement P1, alors elles seront dans le deuxième état de spin T+ au deuxième point de fonctionnement P2. De même, si les particules chargées PC sont dans le deuxième état de spin T+ au premier point de fonctionnement P1, alors elles seront dans le premier état de spin S au deuxième point de fonctionnement. Cependant, comme déjà mentionné, au premier point de fonctionnement P1, le deuxième état de spin T+ correspond au premier état de charge (1,1) tandis qu'au deuxième point de fonctionnement le premier état de spin S correspond à l'état de charge relatif audit point de fonctionnement (c'est-à-dire au deuxième état de charge (2,0) ou au troisième état de charge (0,2)). Aussi, lors de la deuxième étape 1E3 de modification du point de fonctionnement, le système SYS transite du premier état de charge (1,1) à l'état de charge correspondant au deuxième point de fonctionnement P2 lorsque les des deux particules chargées PC contenues dans le système SYS sont dans le deuxième état de spin T+ au premier point de fonctionnement P1. Il y a donc conversion spin/-charge lors de cette étape lorsque l'état de spin des particules chargées PC au premier point de fonctionnement P1 est le deuxième état de spin T+.

Pour des raisons similaires, si les particules chargées PC sont dans le premier état de spin S au premier point de fonctionnement, alors elles seront dans le deuxième état de spin T+ au deuxième fonctionnement P2. De plus, comme mentionné précédemment, l'état de charge correspondant au premier état de spin S au premier point de fonctionnement P1 est le premier état de charge (1,1) et l'état de charge correspondant au deuxième état de spin T+ au deuxième point de fonctionnement P2 est aussi le premier état de charge (1,1). Aussi, aucun changement d'état de charge n'est constaté lors de cette étape 1E3 dans ce cas.

Comme précédemment, le diagramme en énergie de la [Fig.8] permet de constater que, lors de la deuxième étape 1E3 de modification du point de fonctionnement, si les particules chargées PC sont dans un troisième état de spin T0 ou un quatrième état de spin T- au premier point de fonctionnement P1, leur état de spin n'est pas modifié et aucun changement d'état de charge n'est observé.

Aussi, lors de la deuxième étape 1E3 de modification du point de fonctionnement, le système SYS se maintient dans le premier état de charge (1,1) pour les autres états de spin, c'est-à-dire lorsque les particules chargées PC sont dans un premier S, troisième T0 ou quatrième T- état de spin.

Afin de pouvoir déterminer s'il y a eu ou non un changement de l'état de charge du système SYS, le procédé 100 selon l'invention comprend une deuxième étape 1E4 de mesure de l'état de charge du système SYS, l'état de spin des deux particules chargées PC étant le deuxième état de spin T+ si l'état de charge du système mesuré est égal à l'état de charge correspondant au deuxième point de fonctionnement P2. Il est utile de noter ici que l'absence de changement d'état de charge du système SYS lors de cette étape permet de déduire que l'état de spin des particules chargées PC n'est pas le deuxième état de spin T+, mais ne permet pas de déduire cet état de spin, ce dernier pouvant être le premier état de spin S, le troisième état de spin T0 et le quatrième état de spin T-.

Aussi, en l'absence de changement d'état de charge, il est nécessaire de poursuivre le procédé 100 et le point de fonctionnement est donc à nouveau déplacé au premier point de fonctionnement P1 afin de poursuivre le procédé 100. Comme précédemment, ce déplacement est de préférence effectué rapidement par le chemin le plus court dans le diagramme de stabilité en le point de fonctionnement auquel est effectuée la mesure de l'état de charge et le premier point de fonctionnement P1.

*Chronologies des première et deuxième étapes de modification du point de fonctionnement*

Il apparait de ce qui précède que la deuxième étape 1E3 de modification du point de fonctionnement peut être effectuée avant ou après la première étape 1E1 de modification du point de fonctionnement et que donc, les deux ordinogrammes de la [Fig.1] sont deux variantes de mise en œuvre du procédé 100 selon l'invention. Bien étendue, les étapes 1E2, 1E4 de mesure de l'état de charge doivent être permutées en conséquence.

*Troisième état de spin T+ ou quatrième état de spin T-*

Il est intéressant de noter qu'à ce stade du procédé 100, le premier état de spin S et le deuxième état de spin T+ ont été éliminés des états de spin possibles, ces derniers n'ayant pas été détectés lors de la mise en œuvre des étapes 1E1-1E4 décrites précédemment.

A l'issue des étapes 1E1-1E4 qui viennent d'être présentées, comme illustré à la [Fig. 10], le procédé 100 selon l'invention comprend ensuite une troisième étape 1E5 de modification du point de fonctionnement du système durant laquelle le point de fonctionnement se déplace du premier point de fonctionnement P1 vers le deuxième point de fonctionnement P2, la modification du point de fonctionnement se faisant rapidement lors du passage du croisement évité.

Il s'agit donc d'un déplacement identique à celui réalisé lors de la première étape 1E1 du point de fonctionnement. Or, il a été vu que, durant cette étape 1E5, si les particules chargées PC sont dans le troisième état de spin T0 au premier point de fonctionnement P1, alors elles sont également dans le troisième état de spin T0 au deuxième point de fonctionnement P2. De même, durant cette étape 1E5, si les particules chargées PC sont dans le quatrième état de spin T- au premier point de fonctionnement P1, alors elles sont également dans le quatrième état de spin T- au deuxième point de fonctionnement P2. Dans les deux cas, aucun changement de l'état de charge du système SYS n'est donc observé.

Le procédé 100 selon l'invention comprend ensuite une étape 1E6 d'attente à un point de fonctionnement d'attente P3 correspondant à un état de charge identique à celui du deuxième point de fonctionnement P2 durant un temps prédéfini. Le point de fonctionnement d'attente P3 peut être identique au deuxième point P2 de fonctionnement ou différent de ce dernier (cet aspect sera détaillé dans la suite), mais correspond à un même état de charge que ce dernier. Lorsque le point de fonctionnement d'attente P3 est différent du deuxième point de fonctionnement P2, alors la valeur du premier paramètre $\Gamma$ associée au point de fonctionnement d'attente P3 est inférieure à la valeur dudit paramètre associée au deuxième point de fonctionnement P2.

Durant ce temps d'attente, les interactions des particules chargées PC avec les phonons sont susceptibles d'entraîner la relaxation d'un état de spin de départ à un second état de spin de plus faible énergie, ici le premier état de spin S (cf. [Fig. 8]). De plus, il est connu de la personne du domaine que cette relaxation est généralement au moins 100 plus rapide pour une transition du troisième état de spin T0 vers le premier état de spin S ($\Delta m_z = 0$) que pour les transitions de T+ ou T-. Or, la transition du troisième état de spin T0 au premier état de spin S entraîne également un changement de l'état charge du système SYS. Aussi, durant cette étape, du fait de la relaxation induite par les phonons, le système SYS transite du premier état de charge (1,1) à l'état de charge correspondant au deuxième point de fonctionnement d'attente (et identique à l'état de charge correspondant au deuxième point de fonctionnement P2) lorsque les deux particules chargée PC sont dans le troisième état de spin T0 et se maintient dans le premier état de charge pour le quatrième état de spin T-. Il y a donc conversion spin/charge lors de cette étape lorsque l'état de spin des particules chargées PC au premier point de fonctionnement P1 est le troisième état de spin T0.

Dans l'exemple de la [Fig. 10], le point de fonctionnement d'attente P3 est différent du deuxième point de fonctionnement P2. Aussi, dans ce mode de réalisation, l'étape 1E6 d'attente est précédée d'une étape de déplacement du point de fonctionnement du deuxième point de fonctionnement P2 vers le point de fonctionnement d'attente P3.

Dans un mode de réalisation, la vitesse de modification du point de fonctionnement du point de fonctionnement P2 au point de fonctionnement P3 est choisi de sorte que le temps nécessaire pour amener le système du deuxième point de fonctionnement P2 jusqu'au point de fonctionnement P4 auquel a lieu la mesure de l'état de charge est largement inférieur (par exemple au moins cent fois inférieur) au temps de relaxation entre l'état de spin T0 correspondant au premier état de charge (1,1) et l'état de spin S correspondant au deuxième (2,0) ou au troisième (0,2) état de charge. C'est en ce sens que le déplacement peut être qualifié de rapide dans ce cas-là.

De préférence, le point de fonctionnement P3 est choisi proche d'un point de fonctionnement dans lequel le premier état de spin S correspondant à l'état de charge (1,1) et le troisième état de spin T0 correspondant à l'état de charge (1,1) sont quasi-dégénérés de sorte à être dominé par la différence d'énergie Zeeman entre les deux boites quantiques dEz et à favoriser l'interaction avec les phonons. Par exemple, le point P3 est choisi de sorte que :

$$\frac{(ET0(1,1)_{P3} - ES(1,1)_{P3}) - dEz}{dEz} < 0.01$$

Où $dEz$ est la différence d'énergie Zeeman entre les deux boites quantiques, $ET0(1,1)_{P3}$ est l'énergie associée à l'état de spin T0 au point de fonctionnement P3 et $ES(1,1)_{P3}$ est l'énergie associée à l'état de spin S au point de fonctionnement P3.

*Utilisation d'un point de fonctionnement intermédiaire*

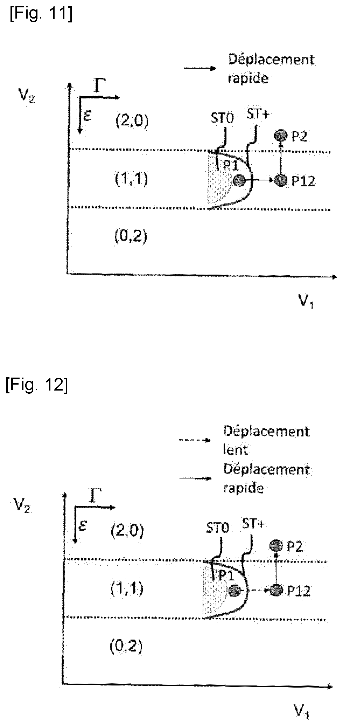

Dans un mode de réalisation illustré à la [Fig. 11] (dans le cas d'un déplacement rapide) et à la [Fig. 12] (dans le cas d'un déplacement lent), chaque étape de modification du point de fonctionnement du premier point de fonctionnement P1 au deuxième point de fonctionnement P2 comprend :

- une sous-étape de modification du premier point de fonctionnement P1 à un point de fonctionnement intermédiaire P12, le point de fonctionnement intermédiaire P12 correspondant au premier état de charge du système, le croisement évité formé par le premier état de spin S et du deuxième état de spin T+ étant franchi lors de cette sous-étape (en respectant la vitesse de modification de l'étape de modification du point de fonctionnement concernée) ;

- une sous-étape de déplacement du point de fonctionnement intermédiaire P12 au deuxième point de fonctionnement P2, le déplacement se faisant rapidement durant cette sous-étape.

De préférence, lors de la première sous-étape, la modification du point de fonctionnement ne porte que sur la valeur du premier paramètre $\Gamma$. De même, de préférence, lors de la deuxième sous-étape, la modification du point de fonctionnement ne porte que sur la valeur du deuxième paramètre $\varepsilon$.

*Point de fonctionnement de lecture P4*

Afin d'augmenter la fiabilité de la mesure de l'état de charge, il est nécessaire d'effectuer cette mesure pour un point de fonctionnement pour lequel le couplage entre la première boite quantique QD1 et la deuxième boite quantique QD2 est plus faible que le temps de mesure de l'état de charge de sorte que l'état de charge ne varie pas au cours de la mesure. Autrement dit, pour un temps de mesure $\tau_{mes}$, alors le première paramètre $\Gamma$ doit être tel que :

$$\Gamma \ll \frac{1}{\tau_{mes}}$$

Par exemple :

$$\Gamma < \frac{1}{100 \times \tau_{mes}}$$

Aussi, dans ce mode de réalisation, chaque étape de mesure de l'état de charge est précédée d'une étape de modification rapide du point de fonctionnement du deuxième point de fonctionnement P2 ou du point de fonctionnement d'attente P3 vers un quatrième point de fonctionnement P4 correspondant à un état de charge identique au deuxième point de fonctionnement P2 et ayant une valeur du première paramètre $\Gamma$ telle que :

$$\Gamma \ll \frac{1}{\tau_{mes}}$$

où $\tau_{mes}$ est la constante de temps associée à la mesure de l'état de charge du système.

Dans un mode de réalisation, la vitesse de modification du point de fonctionnement du point de fonctionnement P2 au point de fonctionnement P4 est choisi de sorte que le temps nécessaire pour amener le système du deuxième point P2 de fonctionnement jusqu'au quatrième point de fonctionnement P4 est largement inférieur (par exemple au moins cent fois inférieur) au temps de relaxation entre l'état de spin T0 correspondant au premier état de charge (1,1) et l'état de spin S correspondant au deuxième (2,0) ou au troisième (0,2) état de charge. C'est en ce sens que le déplacement peut être qualifié de rapide dans ce cas-là.

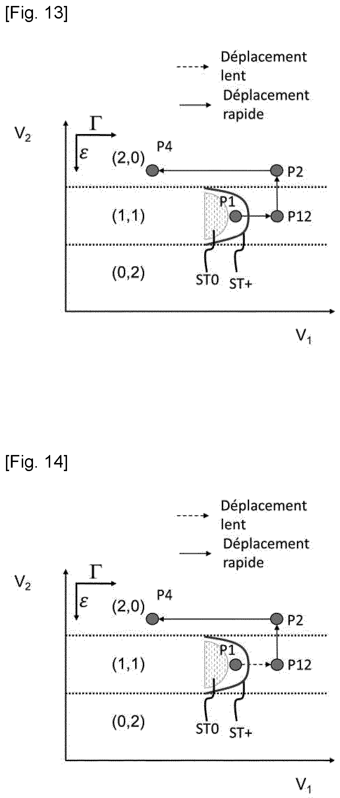

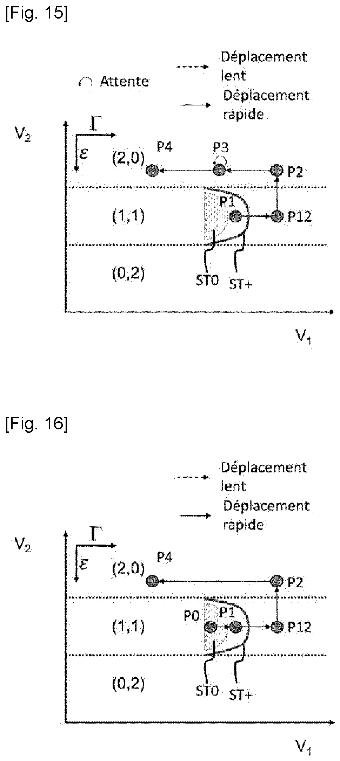

Un exemple de mise en œuvre de ce mode de réalisation combiné au mode de réalisation relatif au point de fonctionnement intermédiaire P12 est illustré à la [Fig. 13], à la [Fig. 14] et à la [Fig. 15] :

- à la [Fig. 13] pour la séquence comprenant un déplacement rapide au niveau du croisement évité ST+ sans temps d'attente ;

- à la [Fig. 14] pour la séquence comprenant un déplacement lent au niveau du croisement évité ST+ sans temps d'attente ;

- à la [Fig. 15] pour la séquence comprenant un déplacement rapide au niveau du croisement évité ST+ avec un temps d'attente au point de fonctionnement d'attente P3 (ici différent du deuxième point de fonctionnement P2).

*Position initiale du point de fonctionnement*

Généralement, la détermination de l'état de spin des particules chargées PC est effectuée après une étape de manipulation. Or, cette étape de manipulation se fait généralement alors que le point de fonctionnement est dans la région ST0 correspondant au premier état de charge (1,1).

Aussi, dans un mode de réalisation, le procédé comprend une étape préliminaire de modification adiabatique du point de fonctionnement depuis un point de position de manipulation P0, où le système est dominé par les énergies Zeeman associées aux deux particules chargées chacune dans une boite quantique (avec pour base des niveaux d'énergie propre (u,u), (d,d), (u,d) et (d,u) où signifie up et d signifie down) vers le premier point de fonctionnement P1 (avec pour base des niveaux d'énergie propre S, T0, T+, T-). La notion de modification adiabatique est ici relative à l'écart en énergie entre l'état de spin S associé à l'état de charge (1,1) et l'état de spin T0 associé à l'état de charge (1,1), cet écart étant fonction de la différence en champ magnétique entre les deux boites quantiques QD1,QD2.

Bien entendu, s'agissant d'une étape préliminaire, cette dernière est mise en œuvre avant la première étape 1E1 de modification ou la deuxième étape 1E3 de modification du point si cette dernière est effectuée avant la première étape 1E1 de modification. Une telle étape est illustrée à la [Fig. 16] dans le mode de réalisation où cette dernière est suivie de la première étape 1E1 de modification du point de fonctionnement (c'est-à-dire avec une modification rapide du point de fonctionnement).

*Conditions d'arrêt du procédé.*

Il est possible d'adopter deux conditions d'arrêt du procédé selon l'invention. Dans un mode de réalisation, l'ensemble des étapes est mis en œuvre même lorsqu'un changement de l'état de charge est détecté au cours du procédé. Ce mode présente l'avantage de ne pas nécessité de contre réaction rapide (ou feedback en anglais) et permet de détecter certaines erreurs dans la mesure de l'état de spin. Dans un mode de réalisation alternatif, le procédé est stoppé lorsqu'un changement de l'état de charge est détecté. Ce mode de réalisation permet de gagner en vitesse de mesure, seules les étapes nécessaires étant mises en œuvre.

**Détermination de la fidélité de la mesure du premier état de spin S**

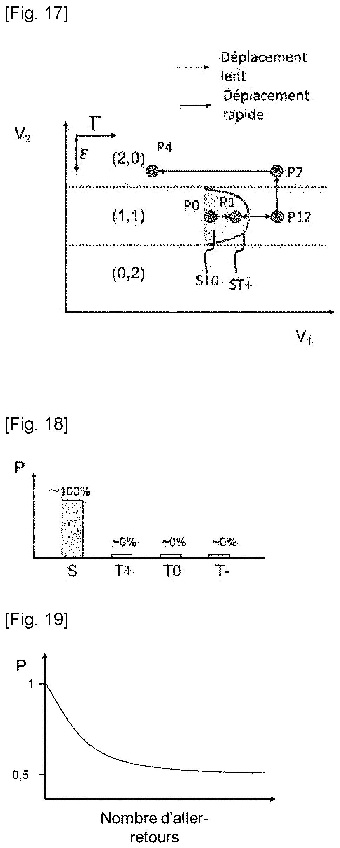

Il peut être intéressant d'évaluer la fidélité du procédé 100 qui vient d'être présenté. Afin de déterminer cette fidélité pour la mesure du premier état de spin S, un deuxième aspect de l'invention illustré à la [Fig. 17] concerne un procédé de détermination de la fidélité de la mesure du premier état de spin S. Afin de mesurer cette fidélité, le procédé est mis en œuvre à partir d'une population d'états de spins initiale (cf. [Fig. 18]) dans laquelle le premier état de spin S est majoritaire (c'est-à-dire au-dessus de 50%, de préférence au-dessus de 90% - dans l'exemple de la [Fig. 18], cette proportion est voisine des 100%).

De manière générale, afin d'obtenir cette population, un état de spin est préparé alors que le système est dans un point de fonctionnement initial P0 pour lequel la première boite quantique QD1 est découplé de la deuxième boite quantique QD2, par exemple dans la région ST0 déjà présentée. Puis, le point de fonctionnement est modifié lentement de ce point de fonctionnement initial P0 vers le premier point de fonctionnement P1. Cette procédure est répétée après chaque étape de mesure 1E2 de l'état de spin de sorte à mettre en œuvre le procédé pour la population de spin désirée.

A partir de la population ainsi obtenue, le procédé selon un deuxième aspect de l'invention comprend une étape de modification du point de fonctionnement du système SYS durant laquelle le point de fonctionnement se déplace du premier point de fonctionnement P1 vers un deuxième point de fonctionnement P2 correspondant au deuxième état de charge (2,0) ou au troisième état de charge (0,2), le niveau d'énergie du premier état de spin S et du deuxième état de spin T+ formant un croisement évité lors du déplacement du premier point de fonctionnement P1 vers le deuxième point de fonctionnement P2, la modification du point de fonctionnement comprenant un nombre prédéterminé d'aller-retours rapides de part et d'autre du croisement évité. Il s'agit donc ici de répéter une pluralité de fois la conversation spin/charge opérée lors de la première étape 1E1 de modification du point de fonctionnement du procédé 100 selon un premier aspect de l'invention.

Dans l'exemple de la [Fig. 17], l'étape de modification du point de fonctionnement du système SYS comprend une première sous-étape de modification rapide du point de fonctionnement durant laquelle les aller-retours sont effectués entre le premier point P1 de fonctionnement et un point de fonctionnement intermédiaire P12, le point de fonctionnement intermédiaire P12 correspondant au premier état de charge du système SYS, le croisement évité ST+ formé par le premier état de spin S et du deuxième état de spin T+ étant franchi lors de chaque aller-retour.

L'étape de modification du point de fonctionnement comprend ensuite une sous-étape de modification du point de fonctionnement intermédiaire P12 au deuxième point de fonctionnement P2, la modification se faisant rapidement durant cette sous-étape.

Le procédé comprend ensuite une étape de mesure de l'état de charge du système SYS, l'état de spin des deux particules chargées PC au premier point de fonctionnement P1 étant le premier état de spin S si l'état de charge du système SYS mesuré est égal à l'état de charge correspondant au deuxième point de fonctionnement P2. De préférence, cette étape de mesure se fait au point de fonctionnement de lecture P4 décrit précédemment.

La fidélité de la mesure peut ensuite être déduite de l'évolution de la probabilité de mesurer l'état de charge correspondant au deuxième point de fonctionnement P2 en fonction du nombre d'aller-retours. Une telle évolution est illustrée à la [Fig. 19].

**Détermination de la fidélité de la mesure du deuxième état de spin T+**

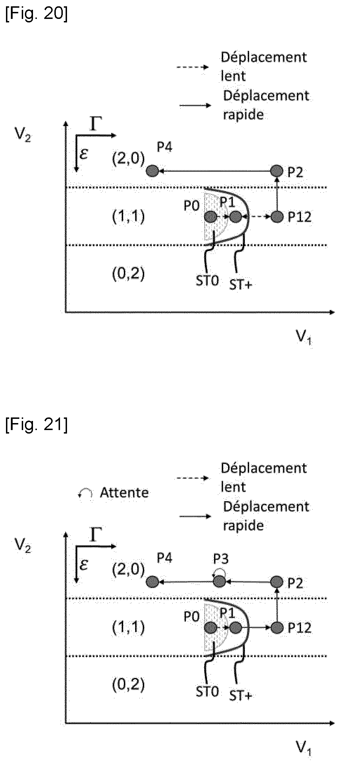

Il est également possible de déterminer la fidélité de la mesure de du deuxième état de spin T+. Pour cela, comme illustré à la [Fig. 20], le procédé de détermination de la mesure du premier état de spin qui vient d'être décrit est mis en œuvre avec les modifications suivantes : le deuxième état de spin T+ est majoritaire dans la population initiale et les aller-retours sont effectuée lentement. Les autres éléments du procédé sont identiques.

La fidélité de la mesure peut ensuite être déduite de l'évolution de la probabilité de mesurer le deuxième état de spin T+ (c'est-à-dire de mesurer un changement de l'état de charge) en fonction du nombre d'aller-retour. Une telle évolution est similaire à celle illustrée à la [Fig. 19] pour le premier état de spin.

**Détermination de la fidélité de la mesure du troisième état de spin T0**

Il est enfin possible de déterminer la fidélité de la mesure du troisième état de spin T0. Afin de déterminer cette fidélité pour la mesure du premier état de spin S, un quatrième aspect de l'invention illustré à la [Fig. 21] concerne un procédé de détermination de la fidélité de la mesure du troisième état de spin T0. Afin de mesurer cette fidélité, le procédé est mis en œuvre à partir d'une population d'états de spins initiale dans laquelle le troisième état de spin T0 est majoritaire (c'est-à-dire au-dessus de 50%, de préférence au-dessus de 90%).

Le procédé comprend tout d'abord une étape de modification du point de fonctionnement du système durant laquelle le point de fonctionnement se déplace du premier point de fonctionnement P1 vers un deuxième point de fonctionnement P2 correspondant au deuxième état de charge (2,0) ou au troisième état de charge (0,2), le niveau d'énergie du premier état de spin S et du deuxième état de spin T+ formant un croisement évité lors du déplacement du premier point de fonctionnement

P1 vers le deuxième point de fonctionnement (P2), la modification du point de fonctionnement se faisant rapidement lors du passage du croisement évité. Comme pour les procédés décrit précédemment, cette modification peut être effectuée en passant par un point de fonctionnement intermédiaire P12 (cf. [Fig. 21]).

Le procédé comprend ensuite une étape d'attente à un point de fonctionnement d'attente P3 correspondant à un état de charge identique à celui du deuxième point de fonctionnement P2 durant un temps prédéfini. Lorsque le point de fonctionnement d'attente P3 est différent du deuxième point de fonctionnement P2, alors la valeur du premier paramètre $\Gamma$ associée au point de fonctionnement d'attente P3 est inférieure à la valeur dudit paramètre associée au deuxième point de fonctionnement P2. De préférence, le point de fonctionnement P3 est choisi proche d'un point de fonctionnement dans lequel l'état S associé à l'état de charge (1,1) et l'état T0 associé à l'état de charge (1,1) sont quasi-dégénérés de sorte à être dominé par la différence d'énergie Zeeman entre les deux boites quantiques dEz et à favoriser l'interaction avec les phonons. Par exemple, le point P3 est choisi de sorte que :

$$\frac{(ET0(1,1)_{P3} - ES(1,1)_{P3}) - dEz}{dEz} < 0.01$$

Où $dEz$ est la différence d'énergie Zeeman entre les deux boites quantiques, $ET0(1,1)_{P3}$ est l'énergie associée à l'état de spin T0 au point de fonctionnement P3 et $ES(1,1)_{P3}$ est l'énergie associée à l'état de spin S au point de fonctionnement P3.

Le procédé comprend ensuite une étape de mesure de l'état de charge du système SYS. De préférence, cette étape de mesure se fait au point de fonctionnement de lecture P4 décrit précédemment.

Les étapes sont répétées à partir de la même population d'état de spins pour une pluralité de temps d'attentes prédéfinis, la fidélité étant déterminée à partir de l'évolution de la probabilité de mesure d'un état de charge correspondant au deuxième point de fonctionnement P2 en fonction du temps d'attente. Il est intéressant de noter que cette procédure de mesure de la fidélité peut être utilisée pour déterminer le temps d'attente permettant d'obtenir la meilleure fidélité et donc celui qu'il convient d'utiliser dans le procédé 100 selon un premier aspect de l'invention.

### Dispositif selon l'invention

Afin de mettre en œuvre un procédé selon un premier, deuxième, troisième ou quatrième aspect de l'invention, un cinquième aspect de l'invention concerne un dispositif comprenant au moins deux boite QD1,QD2, de préférence une matrice MQ de boites quantiques QD et des moyens configurés pour mettre en œuvre un procédé selon un premier, deuxième, troisième ou quatrième aspect de l'invention. Un tel dispositif susceptible d'être configuré pour mettre en œuvre l'invention est par exemple décrit dans le document FR 306629 A1.

### Revendications

1. Procédé (100) de mesure de l'état de spin de deux particules chargées (PC) pouvant adopter un premier état de spin noté S, un deuxième état de spin noté T+, un troisième état de spin noté T0 et un quatrième état de spin noté T-, les deux particules chargées (PC) étant contenues dans un système, comprenant une première boite quantique (QD1) et une deuxième boite quantique (QD2) **caractérisé par** un premier paramètre $\Gamma$ relatif à la barrière de potentiel (BPI) séparant les deux boites quantiques (QD1,QD2) et un deuxième paramètre $\varepsilon$ correspondant à la différence en énergie entre l'état fondamental de la première boite quantique (QD1) et l'état fondamental de la deuxième boite quantique (QD2), le couple formé par les valeurs de ces deux paramètres définissant un point de fonctionnement du système (SYS) en fonction duquel le système adopte un premier état de charge noté (1,1) dans lequel chaque boite quantique (QD1,QD2) contient une particule chargée (PC), un deuxième état de charge noté (2,0) dans lequel la première boite quantique (QD1) contient deux particules chargées (PC) ou un troisième état de charge noté (0,2) dans lequel la deuxième boite quantique (QD2) contient deux particules chargée (PC), le point de fonctionnement du système (SYS) étant initialement dans un premier point de fonctionnement (P1) correspondant au premier état de charge (1,1) du système (SYS) et pour lequel le premier S, le deuxième T+, le troisième T0 et le quatrième T- états de spin sont des états propres du spin des deux particules chargées (PC), le procédé (100) comprenant :

   - une première étape (1E1) de modification du point de fonctionnement du système (SYS) durant laquelle le point de fonctionnement se déplace du premier point de fonctionnement (P1) vers un deuxième point de fonctionnement (P2) correspondant au deuxième état de charge (2,0) ou au troisième état de charge (0,2), le niveau d'énergie du premier état de spin S et du deuxième état de spin T+ formant un croisement évité lors du déplacement du premier point de fonctionnement (P1) vers le deuxième point de fonctionnement (P2), la modification du point de fonctionnement se faisant non-adiabatiquement lors du passage du croisement évité de sorte que, durant cette étape (1E1), le système (SYS) transite du premier état de charge (1,1) à l'état de charge correspondant au deuxième point de fonctionnement (P2) lorsque les deux particules chargées (PC) contenues dans le système (SYS) sont dans le premier état de spin S et se maintient dans le premier état de charge (1,1) pour les autres états de spin ;
- une première étape (1E2) de mesure de l'état de charge du système (SYS), l'état de spin des deux particules chargées (PC) au premier point de fonctionnement (P1) étant le premier état de spin S si l'état de charge du système (SYS) mesuré est égal à l'état de charge correspondant au deuxième point de fonctionnement (P2), le point de fonctionnement étant à nouveau déplacé au premier point de fonctionnement (P1) ;
- une deuxième étape (1E3) de modification du point de fonctionnement du système (SYS) durant laquelle le point de fonctionnement se déplace du premier point de fonctionnement (P1) vers le deuxième point de fonctionnement (P2), la modification du point de fonctionnement se faisant adiabatiquement lors du passage du croisement évité de sorte que, durant cette étape, le système (SYS) transite du premier état de charge (1,1) à l'état de charge correspondant au deuxième point de fonctionnement (P2) lorsque les des deux particules chargées (PC) contenues dans le système (SYS) sont dans le deuxième état de spin T+ et se maintient dans le premier état de charge (1,1) pour les autres états de spin ;
- une deuxième étape (1E4) de mesure de l'état de charge du système, l'état de spin des deux particules chargées (PC) au premier point de fonctionnement (P1) étant le deuxième état de spin T+ si l'état de charge du système (SYS) mesuré est égal à l'état de charge correspondant au deuxième point de fonctionnement (P1), le point de fonctionnement étant à nouveau déplacé au premier point de fonctionnement (P1) ;
- une troisième étape (1E5) de modification du point de fonctionnement du système durant laquelle le point de fonctionnement se déplace du premier point de fonctionnement (P1) vers le deuxième point de fonctionnement (P2), la modification du point de fonctionnement se faisant non-adiabatiquement lors du passage du croisement évité ;
- une étape (1E6) d'attente à un point de fonctionnement d'attente (P3) correspondant à un état de charge identique à celui du deuxième point de fonctionnement (P2) durant un temps prédéfini, étape durant laquelle le système transite du premier état de charge (1,1) à l'état de charge correspondant au deuxième point de fonctionnement (P2) lorsque les des deux particules chargée (PC) sont dans le troisième état de spin T0 et se maintient dans le premier état de charge pour le quatrième état de spin T- ;
- une troisième étape (1E7) de mesure de l'état de charge du système (SYS), l'état de spin des deux particules au premier point de fonctionnement (P1) étant le troisième état de spin T0 si l'état de charge du système (SYS) mesuré est égal à l'état de charge correspondant au deuxième point de fonctionnement (P2) et le quatrième état de spin T- si l'état de charge du système mesuré est égal au premier état de charge (1,1).

2. Procédé (100) selon la revendication précédente dans lequel le point de fonctionnement d'attente (P3) est différent du deuxième point de fonctionnement (P2), le procédé comprenant, avant l'étape (1E6) d'attente, étape de déplacement du point de fonctionnement du deuxième point de fonctionnement (P2) vers le point de fonctionnement d'attente (P3).

3. Procédé (100) selon l'une des deux revendications précédentes dans lequel chaque étape (1E1, 1E3, 1E5) de modification du point de fonctionnement du premier point de fonctionnement (P1) au deuxième point de fonctionnement (P2) comprend :

   - une sous-étape de modification du premier point de fonctionnement (P1) à un point de fonctionnement intermédiaire (P12), le point de fonctionnement intermédiaire (P12) correspondant au premier état de charge du système (SYS), le croisement évité (ST+) formé par le premier état de spin S et du deuxième état de spin T+ étant franchi lors de cette sous-étape ;
   - une sous-étape de modification du point de fonctionnement intermédiaire (P12) au deuxième point de fonctionnement (P2), la modification se faisant non-adiabatiquement durant cette sous-étape.

4. Procédé selon l'une des revendications précédentes dans lequel, chaque étape (1E2,1E4,1E7) de mesure de l'état de charge est précédée d'une étape de déplacement du point de fonctionnement du deuxième point de fonctionnement (P2) ou du point de fonctionnement d'attente (P3) vers un quatrième point de fonctionnement (P4) correspondant à un état de charge identique au deuxième point de fonctionnement (P2) et ayant une valeur du première paramètre $\Gamma$ telle que :

$$\Gamma \ll \frac{1}{\tau_{mes}}$$

où $\tau_{mes}$ est la constante de temps associée à la mesure de l'état de charge du système.

**5.** Procédé de détermination de la fidélité de la mesure d'un premier état de spin noté S de deux particules chargées (PC) pouvant adopter ledit premier état de spin S, un deuxième état de spin noté T+, un troisième état de spin noté T0 et un quatrième état de spin noté T-, les deux particules chargées (PC) étant contenues dans un système, comprenant une première boite quantique (QD1) et une deuxième boite quantique (QD2) et **caractérisé par** un première paramètre Γ relatif à la barrière de potentiel (BPI) séparant les deux boites quantiques (QD1,QD2) et un deuxième paramètre ε correspondant à la différence en énergie entre l'état fondamental de la première boite quantique (QD1) et l'état fondamental de la deuxième boite quantique (QD2), le couple formé par les valeurs de ces deux paramètres définissant une point de fonctionnement du système (SYS) en fonction duquel le système peut adopter un premier état de charge noté (1,1) dans lequel chaque boite quantique (QD1,QD2) contient une particule chargée (PC), un deuxième état de charge noté (2,0) dans lequel la première boite quantique (QD1) contient deux particules chargées (PC) et un troisième état de charge noté (0,2) dans lequel la deuxième boite quantique (QD2) contient deux particules chargée (PC), le point de fonctionnement du système (SYS) étant initialement dans un premier point de fonctionnement (P1) correspondant au premier état de charge (1,1) du système (SYS) et pour lequel les premier S, deuxième T+, troisième T0 et quatrième T- états de spin sont des états propres du spin des deux particules chargées (PC), le procédé (100) comprenant, pour une population d'états de spins initiale dans laquelle le premier état de spin S est majoritaire :

   - une étape de modification du point de fonctionnement du système (SYS) durant laquelle le point de fonctionnement se déplace du premier point de fonctionnement (P1) vers un deuxième point de fonctionnement (P2) correspondant au deuxième état de charge (2,0) ou au troisième état de charge (0,2), le niveau d'énergie du premier état de spin S et du deuxième état de spin T+ formant un croisement évité lors du déplacement du premier point de fonctionnement (P1) vers le deuxième point de fonctionnement (P2), la modification du point de fonctionnement comprenant un nombre prédéterminé d'aller-retours non-adiabatiques de part et d'autre du croisement évité ;
   - une étape de mesure de l'état de charge du système (SYS) ;

   les étapes étant répétées à partir de la même population d'état de spins pour une pluralité de nombres d'aller-retour, la fidélité étant déterminée à partir de l'évolution de la probabilité de mesure d'un état de charge correspondant au deuxième point de fonctionnement (P2) en fonction du nombre d'aller-retours.

**6.** Procédé de détermination de la fidélité de la mesure d'un deuxième état de spin noté T+ de deux particules chargées (PC) pouvant adopter un premier état de spin S, le deuxième état de spin noté T+, un troisième état de spin noté T0 et un quatrième état de spin noté T-, les deux particules chargées (PC) étant contenues dans un système, comprenant une première boite quantique (QD1) et une deuxième boite quantique (QD2) et **caractérisé par** un première paramètre Γ relatif à la barrière de potentiel (BPI) séparant les deux boites quantiques (QD1,QD2) et un deuxième paramètre ε correspondant à la différence en énergie entre l'état fondamental de la première boite quantique (QD1) et l'état fondamental de la deuxième boite quantique (QD2), le couple formé par les valeurs de ces deux paramètres définissant une point de fonctionnement du système (SYS) en fonction duquel le système peut adopter un premier état de charge noté (1,1) dans lequel chaque boite quantique (QD1,QD2) contient une particule chargée (PC), un deuxième état de charge noté (2,0) dans lequel la première boite quantique (QD1) contient deux particules chargées (PC) et un troisième état de charge noté (0,2) dans lequel la deuxième boite quantique (QD2) contient deux particules chargée (PC), le point de fonctionnement du système (SYS) étant initialement dans un premier point de fonctionnement (P1) correspondant au premier état de charge (1,1) du système (SYS) et pour lequel les premier S, deuxième T+, troisième T0 et quatrième T- états de spin sont des états propres du spin des deux particules chargées (PC), le procédé (100) comprenant, pour une population d'états de spins initiale dans laquelle le deuxième état de spin T+ est majoritaire :

   - une étape de modification du point de fonctionnement du système (SYS) durant laquelle le point de fonctionnement se déplace du premier point de fonctionnement (P1) vers un deuxième point de fonctionnement (P2) correspondant au deuxième état de charge (2,0) ou au troisième état de charge (0,2), le niveau d'énergie du premier état de spin S et du deuxième état de spin T+ formant un croisement évité lors du déplacement du premier point de fonctionnement (P1) vers le deuxième point de fonctionnement (P2), la modification du point de fonctionnement comprenant un nombre prédéterminé d'aller-retours adiabatique de part et d'autre du croisement évité ;
   - une étape de mesure de l'état de charge du système (SYS) ;

les étapes étant répétées à partir de la même population d'état de spins pour une pluralité de nombres d'aller-retour, la fidélité étant déterminée à partir de l'évolution de la probabilité de mesure d'un état de charge correspondant au deuxième point de fonctionnement (P2) en fonction du nombre d'aller-retours.

7. Procédé de détermination de la fidélité de la mesure d'un troisième état de spin noté T0 de deux particules chargées (PC) pouvant adopter un premier état de spin S, un deuxième état de spin noté T+, le troisième état de spin noté T0 et un quatrième état de spin noté T-, les deux particules chargées (PC) étant contenues dans un système, comprenant une première boite quantique (QD1) et une deuxième boite quantique (QD2) et **caractérisé par** un première paramètre $\Gamma$ relatif à la barrière de potentiel (BPI) séparant les deux boites quantiques (QD1,QD2) et un deuxième paramètre $\varepsilon$ correspondant à la différence en énergie entre l'état fondamental de la première boite quantique (QD1) et l'état fondamental de la deuxième boite quantique (QD2), le couple formé par les valeurs de ces deux paramètres définissant une point de fonctionnement du système (SYS) en fonction duquel le système peut adopter un premier état de charge noté (1,1) dans lequel chaque boite quantique (QD1,QD2) contient une particule chargée (PC), un deuxième état de charge noté (2,0) dans lequel la première boite quantique (QD1) contient deux particules chargées (PC) et un troisième état de charge noté (0,2) dans lequel la deuxième boite quantique (QD2) contient deux particules chargée (PC), le point de fonctionnement du système (SYS) étant initialement dans un premier point de fonctionnement (P1) correspondant au premier état de charge (1,1) du système (SYS) et pour lequel les premier S, deuxième T+, troisième T0 et quatrième T- états de spin sont des états propres du spin des deux particules chargées (PC), le procédé (100) comprenant, pour une population d'états de spins initiale dans laquelle le troisième état de spin T0 est majoritaire :

- une étape de modification du point de fonctionnement du système durant laquelle le point de fonctionnement se déplace du premier point de fonctionnement (P1) vers un deuxième point de fonctionnement (P2) correspondant au deuxième état de charge (2,0) ou au troisième état de charge (0,2), le niveau d'énergie du premier état de spin S et du deuxième état de spin T+ formant un croisement évité lors du déplacement du premier point de fonctionnement (P1) vers le deuxième point de fonctionnement (P2), la modification du point de fonctionnement se faisant non-adiabatiquement lors du passage du croisement évité ;

- une étape d'attente à un point de fonctionnement d'attente (P3) correspondant à un état de charge identique à celui du deuxième point de fonctionnement (P2) durant un temps prédéfini ;
- une étape de mesure de l'état de charge du système (SYS) ;

les étapes étant répétées à partir de la même population d'état de spins pour une pluralité de temps d'attentes prédéfinis, la fidélité étant déterminée à partir de l'évolution de la probabilité de mesure d'un état de charge correspondant au deuxième point de fonctionnement (P2) en fonction du temps d'attentes.

8. Dispositif quantique comprenant au moins deux boites quantiques (QD1,QD2) et des moyens configurés pour mettre en œuvre un procédé (100) selon l'une des revendications précédentes.

9. Programme d'ordinateur comprenant des instructions qui, lorsque le programme est exécuté par un dispositif selon la revendication précédente, conduisent celui-ci à mettre en œuvre le procédé selon l'une des revendications 1 à 7.

10. Support de données lisible par ordinateur, sur lequel est enregistré le programme d'ordinateur selon la revendication précédente, ledit programme d'ordinateur comprenant des instructions qui, lorsqu'elles ont été traitées par un dispositif selon la revendication 8, conduisent le programme d'ordinateur à mettre en œuvre le procédé selon l'une des revendications 1 à 7.

**Patentansprüche**

1. Verfahren (100) zum Messen des Spinzustands von zwei geladenen Teilchen (PC), die einen ersten Spinzustand S, einen zweiten Spinzustand T+, einen dritten Spinzustand T0 und einen vierten Spinzustand T- annehmen können, wobei die beiden geladenen Teilchen (PC) in einem System enthalten sind, das einen ersten Quantenpunkt (QD1) und einen zweiten Quantenpunkt (QD2) umfasst, **gekennzeichnet durch** einen ersten Parameter $\Gamma$ in Bezug auf die Potenzialbarriere (BPI), die die beiden Quantenpunkte trennt (QD1, QD2), und einen zweiten Parameter $\varepsilon$, der der Energiedifferenz zwischen dem Grundzustand des ersten Quantenpunkts (QD1) und dem Grundzustand des zweiten Quantenpunkts (QD2) entspricht, wobei das Paar, das durch die Werte dieser beiden Parameter gebildet wird, einen Betriebspunkt des Systems (SYS) definiert, in dessen Abhängigkeit das System einen ersten Ladungszustand mit der Bezeichnung (1,1) annimmt, in dem jeder Quantenpunkt (QD1,QD2) ein geladenes Teilchen (PC) enthält, einen zweiten Ladungszustand (2,0), in dem der erste Quantenpunkt (QD1) zwei geladene Teilchen (PC) enthält, oder einen dritten Ladungszustand (0,2), in dem der zweite Quantenpunkt (QD2) zwei geladene Teilchen (PC) enthält, wobei der Betriebspunkt des Systems (SYS) anfänglich in einem ersten Betriebspunkt (P1) liegt, der dem ersten Ladungszustand (1,1) des Systems (SYS) entspricht und für den der erste Spinzustand S, der zweite Spinzustand T+, der dritte Spinzustand T0 und der vierte Spinzustand T- Eigenzustände des Spins der beiden geladenen Teilchen (PC) sind, wobei das Verfahren (100) umfasst:

- einen ersten Schritt (1E1) zum Ändern des Betriebspunkts des Systems (SYS), während dessen sich der Betriebspunkt vom ersten Betriebspunkt (P1) zu einem zweiten Betriebspunkt (P2) bewegt, der dem zweiten Ladungszustand (2,0) oder dem dritten Ladungszustand (0,2) entspricht, wobei das Energieniveau des ersten Spinzustands S und des zweiten Spinzustands T+ eine Kreuzung bilden, die beim Verschieben des ersten Betriebspunkts (P1) zum zweiten Betriebspunkt (P2) vermieden wird, wobei die Änderung des Betriebspunkts beim Passieren der vermiedenen Kreuzung nicht adiabatisch erfolgt, so dass während dieses Schritts (1E1) das System (SYS) vom ersten Ladungszustand (1,1) in den dem zweiten Betriebspunkt (P2) entsprechenden Ladungszustand übergeht, wenn sich die beiden im System (SYS) enthaltenen geladenen Teilchen (PC) im ersten Spinzustand S befinden, und für die anderen Spinzustände im ersten Ladungszustand (1,1) verbleibt;
- einen ersten Schritt (1E2) zum Messen des Ladungszustands des Systems (SYS), wobei der Spinzustand der beiden geladenen Teilchen (PC) am ersten Betriebspunkt (P1) der erste Spinzustand S ist, wenn der gemessene Ladungszustand des Systems (SYS) dem Ladungszustand entspricht, der dem zweiten Betriebspunkt (P2) entspricht, wobei der Betriebspunkt erneut auf den ersten Betriebspunkt (P1) verschoben wird;
- einen zweiten Schritt (1E3) zur Änderung des Betriebspunkts des Systems (SYS), während dessen sich der Betriebspunkt vom ersten Betriebspunkt (P1) zum zweiten Betriebspunkt (P2) verschiebt, wobei die Änderung des Betriebspunkts beim Passieren der vermiedenen Kreuzung adiabatisch erfolgt, so dass während dieses Schritts das System (SYS) vom ersten Ladungszustand (1,1) in den dem zweiten Betriebspunkt (P2) entsprechenden Ladungszustand übergeht, wenn sich die beiden im System (SYS) enthaltenen geladenen Teilchen (PC) im zweiten Spinzustand T+ befinden, und für die anderen Spinzustände im ersten Ladungszustand (1,1) verbleibt;
- einen zweiten Schritt (1E4) zum Messen des Ladungszustands des Systems, wobei der Spinzustand der beiden geladenen Teilchen (PC) am ersten Betriebspunkt (P1) der zweite Spinzustand T+ ist, wenn der gemessene Ladungszustand des Systems (SYS) dem Ladungszustand entspricht, der dem zweiten Betriebspunkt (P1) entspricht, wobei der Betriebspunkt erneut zum ersten Betriebspunkt (P1) verschoben wird;
- einen dritten Schritt (1E5) zur Änderung des Betriebspunkts des Systems, während dessen sich der Betriebspunkt vom ersten Betriebspunkt (P1) zum zweiten Betriebspunkt (P2) verschiebt, wobei die Änderung des Betriebspunkts beim Passieren der vermiedenen Kreuzung nicht adiabatisch erfolgt;
- einen Schritt (1E6) des Wartens an einem Wartebetriebspunkt (P3), der einem Ladungszustand entspricht, der während einer vordefinierten Zeit mit dem des zweiten Betriebspunkts (P2) identisch ist, wobei das System während dieses Schritts vom ersten Ladungszustand (1,1) in den Ladungszustand übergeht, der dem zweiten Betriebspunkt (P2) entspricht, wenn sich die beiden geladenen Teilchen (PC) im dritten Spinzustand T0 befinden, und für den vierten Spinzustand T- im ersten Ladungszustand verbleibt;
- einen dritten Schritt (1E7) zum Messen des Ladungszustands des Systems (SYS), wobei der Spinzustand der beiden Teilchen am ersten Betriebspunkt (P1) der dritte Spinzustand T0 ist, wenn der gemessene Ladungszustand des Systems (SYS) dem Ladungszustand entspricht, der dem zweiten Betriebspunkt (P2) entspricht, und der vierte Spinzustand T- ist, wenn der gemessene Ladungszustand des Systems dem ersten Ladungszustand (1,1) entspricht.

2. Verfahren (100) gemäß dem vorhergehenden Anspruch, bei dem der Wartebetriebspunkt (P3) sich vom zweiten Betriebspunkt (P2) unterscheidet, wobei das Verfahren vor dem Warteschritt (1E6) einen Schritt zum Verschieben des Betriebspunkts vom zweiten Betriebspunkt (P2) zum Wartebetriebspunkt (P3) umfasst.

3. Verfahren (100) gemäß einem der beiden vorhergehenden Ansprüche, bei dem jeder Schritt (1E1, 1E3, 1E5) zur Änderung des Betriebspunkts vom ersten Betriebspunkt (P1) zum zweiten Betriebspunkt (P2) umfasst:

- einen Teilschritt zum Ändern des ersten Betriebspunkts (P1) zu einem Zwischenbetriebspunkt (P12), wobei der Zwischenbetriebspunkt (P12) dem ersten Ladungszustand des Systems (SYS) entspricht und die vermiedene Kreuzung (ST+) zwischen dem ersten Spinzustand S und dem zweiten Spinzustand T+ in diesem Teilschritt überschritten wird;

- einen Teilschritt zum Ändern des Zwischenbetriebspunkts (P12) zum zweiten Betriebspunkt (P2), wobei die Änderung während dieses Teilschritts nicht adiabatisch erfolgt.

4. Verfahren nach einem der vorhergehenden Ansprüche, bei dem jedem Schritt (1E2, 1E4, 1E7) zur Messung des Ladungszustands ein Schritt zur Verschiebung des Betriebspunkts vom zweiten Betriebspunkt (P2) oder vom Wartebetriebspunkt (P3) zu einem vierten Betriebspunkt (P4) vorausgeht, der einem Ladungszustand entspricht, der mit dem zweiten Betriebspunkt (P2) identisch ist und einen Wert des ersten Parameters $\Gamma$ aufweist, der wie folgt lautet:

$$\Gamma \ll \frac{1}{\tau_{mes}}$$

wobei $\tau_{mes}$ die mit der Messung des Ladungszustands des Systems verbundene Zeitkonstante ist.

5. Verfahren zur Bestimmung der Messgenauigkeit eines ersten Spinzustands S von zwei geladenen Teilchen (PC), die den ersten Spinzustand S, einen zweiten Spinzustand T+, einen dritten Spinzustand T0 und einen vierten Spinzustand T- annehmen können, wobei die beiden geladenen Teilchen (PC) in einem System enthalten sind, das einen ersten Quantenpunkt (QD1) und einen zweiten Quantenpunkt (QD2) umfasst, und **gekennzeichnet durch** einen ersten Parameter $\Gamma$, der sich auf die Potenzialbarriere (BPI) bezieht, die die beiden Quantenpunkte (QD1, QD2) trennt, und einen zweiten Parameter $\varepsilon$, der der Energiedifferenz zwischen dem Grundzustand des ersten Quantenpunkts (QD1) und dem Grundzustand des zweiten Quantenpunkts (QD2) entspricht, wobei das Paar, das durch die Werte dieser beiden Parameter gebildet wird, einen Betriebspunkt des Systems (SYS) definiert, in dessen Abhängigkeit das System einen ersten Ladungszustand (1,1) annehmen kann, in dem jeder Quantenpunkt (QD1, QD2) ein geladenes Teilchen (PC) enthält, einen zweiten Ladungszustand (2,0), in dem der erste Quantenpunkt (QD1) zwei geladene Teilchen (PC) enthält, und einen dritten Ladungszustand (0,2), in dem der zweite Quantenpunkt (QD2) zwei geladene Teilchen (PC) enthält, wobei der Betriebspunkt des Systems (SYS) anfänglich in einem ersten Betriebspunkt (P1) liegt, der dem ersten Ladungszustand (1,1) des Systems (SYS) entspricht und für den der erste Spinzustand S, der zweite Spinzustand T+, der dritte Spinzustand T0 und der vierte Spinzustand T- Eigenzustände des Spins der beiden geladenen Teilchen (PC) sind, wobei das Verfahren (100) für eine anfängliche Population von Spinzuständen, in der der erste Spinzustand S mehrheitlich ist, umfasst:

- einen Schritt zur Änderung des Betriebspunkts des Systems (SYS), während dessen sich der Betriebspunkt vom ersten Betriebspunkt (P1) zu einem zweiten Betriebspunkt (P2) verschiebt, der dem zweiten Ladungszustand (2,0) oder dem dritten Ladungszustand (0,2) entspricht, wobei das Energieniveau des ersten Spinzustands S und des zweiten Spinzustands T+ beim Verschieben des ersten Betriebspunkts (P1) zum zweiten Betriebspunkt (P2) eine vermiedene Kreuzung bilden, wobei die Änderung des Betriebspunkts eine vorbestimmte Anzahl von nichtadiabatischen Hin- und Rückbewegungen auf beiden Seiten der vermiedenen Kreuzung umfasst;

- einen Schritt zum Messen des Ladungszustands des Systems (SYS);

wobei die Schritte ausgehend von derselben Population von Spinzuständen für eine Vielzahl von Hin- und Rückbewegungen wiederholt werden, wobei die Genauigkeit anhand der Entwicklung der Messwahrscheinlichkeit eines dem zweiten Betriebspunkt (P2) entsprechenden Ladungszustands in Abhängigkeit von der Anzahl der Hin- und Rückbewegungen bestimmt wird.

6. Verfahren zur Bestimmung der Messgenauigkeit eines zweiten Spinzustands T+ von zwei geladenen Teilchen (PC), die einen ersten Spinzustand S, den zweiten Spinzustand T+, einen dritten Spinzustand T0 und einen vierten Spinzustand T- annehmen können, wobei die beiden geladenen Teilchen (PC) in einem System enthalten sind, das einen ersten Quantenpunkt (QD1) und einen zweiten Quantenpunkt (QD2) umfasst und durch einen ersten Parameter $\Gamma$ in Bezug auf die Potenzialbarriere (BPI) gekennzeichnet ist, die die beiden Quantenpunkte (QD1, QD2) trennt, sowie durch einen zweiten Parameter $\varepsilon$, der der Energiedifferenz zwischen dem Grundzustand des ersten Quantenpunkts (QD1) und dem Grundzustand des zweiten Quantenpunkts (QD2) entspricht, wobei das Paar, das durch die Werte dieser beiden Parameter gebildet wird, einen Betriebspunkt des Systems (SYS) definiert, in dessen Abhängigkeit das System einen ersten Ladungszustand (1,1) annehmen kann, in dem jeder Quantenpunkt (QD1, QD2) ein geladenes Teilchen (PC) enthält, einen zweiten Ladungszustand (2,0), in dem der erste Quantenpunkt (QD1) zwei geladene Teilchen (PC) enthält, und einen dritten Ladungszustand (0,2), in dem der zweite Quantenpunkt (QD2) zwei geladene Teilchen (PC) enthält, wobei der Betriebspunkt des Systems (SYS) anfänglich in einem ersten Betriebspunkt (P1) liegt, der dem ersten Ladungszustand (1,1) des Systems (SYS) entspricht und für den der erste Spinzustand S, der zweite Spinzustand T+, der dritte Spinzustand T0 und der vierte Spinzustand T- Eigenzustände des Spins der beiden geladenen Teilchen (PC) sind, wobei das Verfahren (100) für eine anfängliche Population von Spinzuständen, in der der zweite Spinzustand T+ mehrheitlich ist, umfasst:

- einen Schritt zum Ändern des Betriebspunkts des Systems (SYS), während dessen sich der Betriebspunkt vom ersten Betriebspunkt (P1) zu einem zweiten Betriebspunkt (P2) bewegt, der dem zweiten Ladungszustand (2,0) oder dem dritten Ladungszustand (0,2) entspricht, wobei das Energieniveau des ersten Spinzustands S und des zweiten Spinzustands T+ beim Verschieben des ersten Betriebspunkts (P1) zum zweiten Betriebspunkt (P2) eine vermiedene Kreuzung bilden, wobei die Änderung des Betriebspunkts eine vorbestimmte Anzahl von adiabatischen Hin- und Rückbewegungen auf beiden Seiten der vermiedenen Kreuzung umfasst;
- einen Schritt zum Messen des Ladungszustands des Systems (SYS);

wobei die Schritte ausgehend von derselben Population von Spinzuständen für eine Vielzahl von Hin- und Rückbewegungen wiederholt werden, wobei die Genauigkeit anhand der Entwicklung der Messwahrscheinlichkeit eines dem zweiten Betriebspunkt (P2) entsprechenden Ladungszustands in Abhängigkeit von der Anzahl der Hin- und Rückbewegungen bestimmt wird.

7. Verfahren zur Bestimmung der Messgenauigkeit eines dritten Spinzustands T0 von zwei geladenen Teilchen (PC), die einen ersten Spinzustand S, einen zweiten Spinzustand T+, den dritten Spinzustand T0 und einen vierten Spinzustand T- annehmen können, wobei die beiden geladenen Teilchen (PC) in einem System enthalten sind, das einen ersten Quantenpunkt (QD1) und einen zweiten Quantenpunkt (QD2) umfasst, und **gekennzeichnet durch** einen ersten Parameter $\Gamma$ in Bezug auf die Potenzialbarriere (BPI), die die beiden Quantenpunkte (QD1, QD2) trennt, und einen zweiten Parameter $\varepsilon$, der der Energiedifferenz zwischen dem Grundzustand des ersten Quantenpunkts (QD1) und dem Grundzustand des zweiten Quantenpunkts (QD2) entspricht, wobei das Paar, das aus den Werten dieser beiden Parameter gebildet wird, einen Betriebspunkt des Systems (SYS) definiert, in dessen Abhängigkeit das System einen ersten Ladungszustand (1,1) annehmen kann, in dem jeder Quantenpunkt (QD1,QD2) ein geladenes Teilchen (PC) enthält, einen zweiten Ladungszustand (2,0), in dem der erste Quantenpunkt (QD1) zwei geladene Teilchen (PC) enthält, und einen dritten Ladungszustand (0,2), in dem der zweite Quantenpunkt (QD2) zwei geladene Teilchen (PC) enthält, wobei der Betriebspunkt des Systems (SYS) anfänglich in einem ersten Betriebspunkt (P1) liegt, der dem ersten Ladungszustand (1,1) des Systems (SYS) entspricht und für den der erste Spinzustand S, der zweite Spinzustand T+, der dritte Spinzustand T0 und der vierte Spinzustand T- Eigenzustände des Spins der beiden geladenen Teilchen (PC) sind, wobei das Verfahren (100) für eine anfängliche Population von Spinzuständen, in der der dritte Spinzustand T0 mehrheitlich ist, umfasst:

- einen Schritt zum Ändern des Betriebspunkts des Systems, während dessen sich der Betriebspunkt vom ersten Betriebspunkt (P1) zu einem zweiten Betriebspunkt (P2) bewegt, der dem zweiten Ladungszustand (2,0) oder dem dritten Ladungszustand (0,2) entspricht, wobei das Energieniveau des ersten Spinzustands S und des zweiten Spinzustands T+ beim Verschieben des ersten Betriebspunkts (P1) zum zweiten Betriebspunkt (P2) eine vermiedene Kreuzung bilden, wobei die Änderung des Betriebspunkts beim Passieren der vermiedenen Kreuzung nicht adiabatisch erfolgt;
- einen Schritt des Wartens an einem Wartebetriebspunkt (P3), der einem Ladungszustand entspricht, der mit dem des zweiten Betriebspunkts (P2) identisch ist, während einer vordefinierten Zeit;
- einen Schritt zum Messen des Ladungszustands des Systems (SYS);

wobei die Schritte ausgehend von derselben Population von Spinzuständen für eine Vielzahl vordefinierter Wartezeiten wiederholt werden und die Genauigkeit anhand der Entwicklung der Messwahrscheinlichkeit eines dem zweiten Betriebspunkt (P2) entsprechenden Ladungszustands in Abhängigkeit von der Wartezeit bestimmt wird.

8. Quantenvorrichtung mit mindestens zwei Quantenpunkten (QD1, QD2) und Mitteln, die so konfiguriert sind, dass sie ein Verfahren (100) gemäß einem der vorhergehenden Ansprüche durchführen.

9. Computerprogramm mit Befehlen, die, wenn das Programm von einer Vorrichtung gemäß dem vorhergehenden Anspruch ausgeführt wird, diese dazu veranlassen, das Verfahren gemäß einem der Ansprüche 1 bis 7 durchzuführen.

10. Computerlesbarer Datenträger, auf dem das Computerprogramm gemäß dem vorhergehenden Anspruch gespeichert ist, wobei das Computerprogramm Befehle umfasst, die, wenn sie von einer Vorrichtung gemäß Anspruch 8 verarbeitet werden, das Computerprogramm veranlassen, das Verfahren gemäß einem der Ansprüche 1 bis 7 auszuführen.

**Claims**

1. Method (100) for measuring the spin state of two charged particles (PC) being able to adopt a first spin state noted S, a second spin state noted T+, a third spin state noted T0 and a fourth spin state noted T-, the two charged particles (PC) being contained in a system, comprising a first quantum dot (QD1) and a second quantum dot (QD2) **characterised by** a first parameter $\Gamma$ relative to the potential barrier (BPI) separating the two quantum dots (QD1,QD2)and a second parameter $\varepsilon$ corresponding to the difference in energy between the fundamental state of the first quantum dot (QD1) and the fundamental state of the second quantum dot (QD2), the couple formed by the values of these two parameters defining an operating point of the system (SYS) as a function of which the system adopts a first charge state noted (1,1) wherein each quantum dot (QD1,QD2) contains a charged particle (PC), a second charge state noted (2,0) wherein the first quantum dot (QD1) contains two charged particles (PC) or a third charge state noted (0,2) wherein the second quantum dot (QD2) contains two charged particles (PC), the operating point of the system (SYS) being initially in a first operating point (P1) corresponding to the first charge state (1,1) of the system (SYS) and for which the first S, the second T+, the third T0 and the fourth T- spin states are eigenstates of the spin of the two charged particles (PC), the method (100) comprising:

- a first step (1E1) of modification of the operating point of the system (SYS) during which the operating point is displaced from the first operating point (P1) to a second operating point (P2) corresponding to the second charge state (2,0) or to the third charge state (0,2), the energy level of the first spin state S and the second spin state T+ forming an avoided crossing during the displacement from the first operating point (P1) to the second operating point (P2), the modification of the operating point taking place non-adiabatically during the passage of the avoided crossing such that, during this step (1E1), the system (SYS) transits from the first charge state (1,1) to the charge state corresponding to the second operating point (P2) when the two charged particles (PC) contained in the system (SYS) are in the first spin state S and is maintained in the first charge state (1,1) for the other spin states;
- a first step (1E2) of measuring the charge state of the system (SYS), the spin state of the two charged particles (PC) at the first operating point (P1) being the first spin state S if the charge state of the system (SYS) measured is equal to the charge state corresponding to the second operating point (P2), the operating point being once again displaced to the first operating point (P1);
- a second step (1E3) of modification of the operating point of the system (SYS) during which the operating point is displaced from the first operating point (P1) to the second operating point (P2), the modification of the operating point taking place adiabatically during the passage of the avoided crossing such that, during this step, the system (SYS) transits from the first charge state (1,1) to the charge state corresponding to the second operating point (P2) when the two charged particles (PC) contained in the system (SYS) are in the second spin state T+ and is maintained in the first charge state (1,1) for the other spin states;
- a second step (1E4) of measuring the charge state of the system, the spin state of the two charged particles (PC) at the first operating point (P1) being the second spin state T+ if the charge state of the system (SYS) measured is equal to the charge state corresponding to the second operating point (P1), the operating point being once again displaced to the first operating point (P1);
- a third step (1E5) of modification of the operating point of the system during which the operating point is displaced from the first operating point (P1) to the second operating point (P2), the modification of the operating point taking place non-adiabatically during the passage of the avoided crossing;
- a waiting step (1E6) at a waiting operating point (P3) corresponding to a charge state identical to that of the second operating point (P2) during a predefined time, step during which the system transits from the first charge state (1,1) to the charge state corresponding to the second operating point (P2) when the two charged particles (PC) are in the third spin state T0 and is maintained in the first charge state for the fourth spin state T-;
- a third step (1E7) of measuring the charge state of the system (SYS), the spin state of the two particles at the first operating point (P1) being the third spin state T0 if the charge state of the system (SYS) measured is equal to the charge state corresponding to the second operating point (P2) and the fourth spin state T- if the charge state of the system measured is equal to the first charge state (1,1).

2. Method (100) according to the preceding claim wherein the waiting operating point (P3) is different from the second operating point (P2), the method comprising, before the waiting step (1E6), a step of displacement of the operating point from the second operating point (P2) to the waiting operating point (P3).

3. Method (100) according to one of the two preceding claims wherein each step (1E1, 1E3, 1E5) of modification of the operating point from the first operating point (P1) to the second operating point (P2) comprises:

   - a sub-step of modification from the first operating point (P1) to an intermediate operating point (P12), the intermediate operating point (P12) corresponding to the first charge state of the system (SYS), the avoided crossing (ST+) formed by the first spin state S and the second spin state T+ being crossed during this sub-step;
   - a sub-step of modification from the intermediate operating point (P12) to the second operating point (P2), the modification taking place non-adiabatically during this sub-step.

4. Method according to one of the preceding claims wherein each step (1E2, 1E4, 1E7) of measuring the charge state is preceded by a step of displacement of the operating point from the second operating point (P2) or from the waiting operating point (P3) to a fourth operating point (P4) corresponding to a charge state identical to the second operating point (P2) and having a value of the first parameter Γ such that:

$$\Gamma \ll \frac{1}{\tau_{mes}}$$

where $\tau_{mes}$ is the time constant associated with the measurement of the charge state of the system.

5. Method for determining the fidelity of the measurement of a first spin state noted S of two charged particles (PC) being able to adopt said first spin state S, a second spin state noted T+, a third spin state noted T0 and a fourth spin state noted T-, the two charged particles (PC) being contained in a system, comprising a first quantum dot (QD1) and a second quantum dot (QD2) and **characterised by** a first parameter Γ relative to the potential barrier (BPI) separating the two quantum dots (QD1,QD2) and a second parameter ε corresponding to the difference in energy between the fundamental state of the first quantum dot (QD1) and the fundamental state of the second quantum dot (QD2), the couple formed by the values of these two parameters defining an operating point of the system (SYS) as a function of which the system can adopt a first charge state noted (1,1) wherein each quantum dot (QD1,QD2) contains a charged particle (PC), a second charge state noted (2,0) wherein the first quantum dot (QD1) contains two charged particles (PC) and a third charge state noted (0,2) wherein the second quantum dot (QD2) contains two charged particles (PC), the operating point of the system (SYS) being initially in a first operating point (P1) corresponding to the first charge state (1,1) of the system (SYS) and for which the first S, second T+, third T0 and fourth T- spin states are eigenstates of the spin of the two charged particles (PC), the method (100) comprising, for an initial population of spin states wherein the first spin state S is in the majority:

   - a step of modification of the operating point of the system (SYS) during which the operating point is displaced from the first operating point (P1) to a second operating point (P2) corresponding to the second charge state (2,0) or to the third charge state (0,2), the energy level of the first spin state S and the second spin state T+ forming an avoided crossing during the displacement from the first operating point (P1) to the second operating point (P2), the modification of the operating point comprising a predetermined number of non-adiabatic transitions back and forth on either side of the avoided crossing;
   - a step of measuring the charge state of the system (SYS) ;

   the steps being repeated from the same population of spin states for a plurality of numbers of transitions back and forth, the fidelity being determined from the evolution of the probability of measurement of a charge state corresponding to the second operating point (P2) as a function of the number of transitions back and forth.

6. Method for determining the fidelity of the measurement of a second spin state noted T+ of two charged particles (PC) being able to adopt a first spin state S, the second spin state noted T+, a third spin state noted T0 and a fourth spin state noted T-, the two charged particles (PC) being contained in a system, comprising a first quantum dot (QD1) and a second quantum dot (QD2) and **characterised by** a first parameter $\Gamma$ relative to the potential barrier (BPI) separating the two quantum dots (QD1,QD2) and a second parameter $\varepsilon$ corresponding to the difference in energy between the fundamental state of the first quantum dot (QD1) and the fundamental state of the second quantum dot (QD2), the couple formed by the values of these two parameters defining an operating point of the system (SYS) as a function of which the system can adopt a first charge state noted (1,1) wherein each quantum dot (QD1,QD2) contains a charged particle (PC), a second charge state noted (2,0) wherein the first quantum dot (QD1) contains two charged particles (PC) and a third charge state noted (0,2) wherein the second quantum dot (QD2) contains two charged particles (PC), the operating point of the system (SYS) being initially in a first operating point (P1) corresponding to the first charge state (1,1) of the system (SYS) and for which the first S, second T+, third T0 and fourth T- spin states are eigenstates of the spin of the two charged particles (PC), the method (100) comprising, for an initial population of spin states wherein the second spin state T+ is in the majority:

- a step of modification of the operating point of the system (SYS) during which the operating point is displaced from the first operating point (P1) to a second operating point (P2) corresponding to the second charge state (2,0) or to the third charge state (0,2), the energy level of the first spin state S and the second spin state T+ forming an avoided crossing during the displacement from the first operating point (P1) to the second operating point (P2), the modification of the operating point comprising a predetermined number of adiabatic transitions back and forth on either side of the avoided crossing;
- a step of measuring the charge state of the system (SYS) ;

the steps being repeated from the same population of spin states for a plurality of numbers of transitions back and forth, the fidelity being determined from the evolution of the probability of measurement of a charge state corresponding to the second operating point (P2) as a function of the number of transitions back and forth.

7. Method for determining the fidelity of the measurement of a third spin state noted T0 of two charged particles (PC) being able to adopt a first spin state S, a second spin state noted T+, the third spin state noted T0 and a fourth spin state noted T-, the two charged particles (PC) being contained in a system, comprising a first quantum dot (QD1) and a second quantum dot (QD2) and **characterised by** a first parameter $\Gamma$ relative to the potential barrier (BPI) separating the two quantum dots (QD1,QD2) and a second parameter $\varepsilon$ corresponding to the difference in energy between the fundamental state of the first quantum dot (QD1) and the fundamental state of the second quantum dot (QD2), the couple formed by the values of these two parameters defining an operating point of the system (SYS) as a function of which the system can adopt a first charge state noted (1,1) wherein each quantum dot (QD1,QD2) contains a charged particle (PC), a second charge state noted (2,0) wherein the first quantum dot (QD1) contains two charged particles (PC) and a third charge state noted (0,2) wherein the second quantum dot (QD2) contains two charged particles (PC), the operating point of the system (SYS) being initially in a first operating point (P1) corresponding to the first charge state (1,1) of the system (SYS) and for which the first S, second T+, third T0 and fourth T- spin states are eigenstates of the spin of the two charged particles (PC), the method (100) comprising, for an initial population of spin states wherein the third spin state T0 is in the majority:

- a step of modification of the operating point of the system during which the operating point is displaced from the first operating point (P1) to a second operating point (P2) corresponding to the second charge state (2,0) or to the third charge state (0,2), the energy level of the first spin state S and the second spin state T+ forming an avoided crossing during the displacement from the first operating point (P1) to the second operating point (P2), the modification of the operating point taking place non-adiabatically during the passage of the avoided crossing;
- a waiting step at a waiting operating point (P3) corresponding to a charge state identical to that of the second operating point (P2) during a predefined time;
- a step of measuring the charge state of the system (SYS);

the steps being repeated from the same population of spin states for a plurality of predefined waiting times, the fidelity being determined from the evolution of the probability of measurement of a charge state corresponding to the second operating point (P2) as a function of the waiting times.

8. Quantum device comprising at least two quantum dots (QD1,QD2) and means configured to implement a method (100) according to one of the preceding claims.

9. Computer programme comprising instructions which, when the programme is executed by a device according to the preceding claim, lead it to implement the method according to one of claims 1 to 7.

**10.** Computer readable data support, on which is recorded the computer programme according to the preceding claim, said computer programme comprising instructions which, when the programme is executed by a device according to the claim 8, lead the computer programme to implement the method according to one of claims 1 to 7.

[Fig. 1]

100

[Fig. 2]

[Fig. 3]

[Fig. 4]

[Fig. 5]

[Fig. 6]

[Fig. 7]

[Fig. 8]

[Fig. 9]

[Fig. 10]

[Fig. 11]

[Fig. 12]

EP 4 202 793 B1

[Fig. 13]

[Fig. 14]

[Fig. 15]

[Fig. 16]

[Fig. 17]

[Fig. 18]

[Fig. 19]

[Fig. 20]

[Fig. 21]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 10482388 B1

- FR 306629 A1

**Littérature non-brevet citée dans la description**

- **NAZAROV, Y.** ; **BLANTER, Y.** Quantum Transport: Introduction to Nanoscience. Cambridge University Press, 2009